# EUROPEAN PATENT APPLICATION

(11) **EP 4 517 941 A1**
(43) Date of publication of application: **05.03.2025**
(21) Application number: 22965402.5
(22) Date of filing: 14.11.2022
(51) Int. Cl.: H01M 50/102

(54) **HOUSING ASSEMBLY, BATTERY CELL AND ASSEMBLY METHOD THEREFOR, BATTERY, AND ELECTRICAL DEVICE**

(71) Applicant: Contemporary Amperex Technology (Hong Kong) Limited, Hong Kong (HK)
(72) Inventor: LI, Meng, Ningde City, Fujian 352100 (CN); ZHU, Wenqi, Ningde City, Fujian 352100 (CN); MENG, Hao, Ningde City, Fujian 352100 (CN)
(74) Representative: Gong, Jinping
(86) International application number: PCT/CN2022/131677
(87) International publication number: WO 2024/103209

(57) **Abstract**

This application discloses a housing assembly (10), a battery cell (100) and an assembling method thereof, a battery (1000), and an electrical device. The electrical device includes the battery (1000). The battery (1000) includes the battery cell (100). The battery cell (100) includes an electrode assembly (20) and a housing assembly (10). The housing assembly (10) includes: a housing body (111) with a receptacle (1101), a first housing section (112) disposed at an edge of an opening of the receptacle (1101), and a second housing section (113) disposed at one end of the first housing section (112), the end being away from the housing body (111). An inner diameter of the second housing section (113) is greater than an inner diameter of the housing body (111). The end cap (12) is at least partially accommodated in the second housing section (113) and configured to work together with the housing (11) to package the electrode assembly (20). The assembling method of the battery cell (100) includes: encasing, end cap engagement, and packaging. The above technical solution can reduce waste of space of the housing assembly (10) and increase the energy density of the battery cell (100).

## Description

### TECHNICAL FIELD

This application relates to the technical field of batteries, and in particular, to a housing assembly, a battery cell and an assembling method thereof, a battery, and an electrical device.

### BACKGROUND

In some circumstances, after an electrode assembly of a battery cell is put into a housing, an end cap usually needs to be disposed at the opening of the housing to seal the electrode assembly. However, the disposed end cap is prone to waste much internal space of the housing and impair the energy density of the battery cell.

### TECHNICAL PROBLEMS

In view of the above problem, one of the objectives of some embodiments of this application is to provide a housing assembly, a battery cell and an assembling method thereof, a battery, and an electrical device to alleviate the problem of a low energy density of the battery cell.

### TECHNICAL SOLUTIONS

A technical solution disclosed in an embodiment of this application is as follows:

According to a first aspect, a housing assembly is provided, including:
a housing, including a housing body with a receptacle, a first housing section disposed at an edge of an opening of the receptacle, and a second housing section disposed at one end of the first housing section, the end being away from the housing body, where the receptacle is configured to accommodate an electrode assembly, and an inner diameter of the second housing section is greater than an inner diameter of the housing body; and
an end cap, where the end cap is at least partially accommodated in the second housing section and configured to work together with the housing to package the electrode assembly.

Through the above technical solution, when the electrode assembly is packaged with the end cap, the end cap can clutch on to the inner periphery of the first housing section or to the housing body, thereby eliminating the need to dispose a roll groove, reducing the waste of space of the housing assembly along the height direction, and in turn, increasing the energy density of the battery cell.

In some embodiments, the end cap is fully accommodated in the second housing section, and clutches on to an inner periphery of the first housing section; or
a part of the end cap is accommodated in the second housing section, and another part of the end cap is accommodated in the first housing section and clutches on to the inner periphery of the first housing section; or
a part of the end cap is accommodated in the second housing section, and another part of the end cap is accommodated in the first housing section and clutches on to the housing body.

Based on the above technical solution, the end cap can be fully accommodated in the second housing section to clutch on to the inner periphery of the first housing section. Alternatively, a part of the end cap can be accommodated in the second housing section to clutch on to the inner periphery of the first housing section or to the housing body. In this way, the end cap can fit and cover the opening of the receptacle and be supported by the housing.

In some embodiments, a clutching surface configured to clutch the end cap is disposed on an inner periphery of the first housing section. The clutching surface is a plane perpendicular to a distribution direction of the first housing section and the second housing section, or the clutching surface flares out from the housing body to the second housing section.

Based on the above technical solution, when the end cap is accommodated in the second housing section, the end cap can clutch on to the clutching surface, thereby improving the stability of the clutching surface in supporting the end cap.

In some embodiments, the clutching surface flares out from the housing body to the second housing section, and the clutching surface is a flat face or an arc face.

Based on the above technical solution, no matter whether the clutching surface is a flat face or an arc face, a smooth transition can be implemented between the inner diameter of the housing body and the inner diameter of the second housing section.

In some embodiments, the end cap is in interference fit with the second housing section.

Based on the above technical solution, the connection strength between the end cap and the second housing section is improved, thereby improving the pressure resistance of the end cap, and improving the consistency of battery cells.

In some embodiments, an outer diameter of the second housing section is greater than an outer diameter of the housing body.

Based on the above technical solution, both the housing body and the second housing section possess an appropriate wall thickness, thereby alleviating the problem that the sealing effect of the housing on the electrode assembly is inferior and the fixing effect of the housing on the end cap is inferior due to a deficient wall thickness of the second housing section, and achieving relatively high structural strength of the housing.

In some embodiments, a crimp-sealing portion bent toward the end cap is disposed at one end of the second housing section, the end being away from the first housing section. The crimp-sealing portion is constrained on one side of the end cap, the side being oriented away from the receptacle.

Based on the above technical solution, the movement or position of the end cap relative to the housing along the Y-direction is constrained, thereby increasing the connection strength between the end cap and the housing. Moreover, the movement of the end cap is stopped at the crimp-sealing portion, thereby alleviating the problem that the end cap is prone to rush out of the housing under a high pressure, and in turn, increasing the pressure resistance of the end cap.

In some embodiments, an adhesive layer configured to seal the crimp-sealing portion and the end cap is disposed between the crimp-sealing portion and the end cap.

Based on the above technical solution, on the one hand, the reliability of the connection between the end cap and the housing is improved, thereby improving the pressure resistance of the end cap, On the other hand, no rubber ring is required to occupy the internal space of the housing, thereby improving the space utilization rate of the housing. Still on the other hand, the assembling operation of battery cells is very simple and easy to implement, thereby shortening the assembling time of the battery cells and improving the production efficiency of the battery cells.

In some embodiments, a thickness of the adhesive layer ranges from 50 µm to 2 mm.

Based on the above technical solution, the thickness of the adhesive layer falls within an appropriate range. Therefore, the adhesive layer can implement a firm connection between the crimp-sealing portion and the end cap, and additionally, can reduce the space occupied by the adhesive layer in the housing, thereby increasing the energy density of the battery cell.

In some embodiments, a protruding column is disposed on one side of the end cap, the side being oriented away from the receptacle. The crimp-sealing portion is disposed around the protruding column peripherally.

Based on the above technical solution, when the battery cells are assembled together to form a conventionally defined battery in the form such as a battery module, a battery pack, or a battery box, the battery cells can be supported by the end cap in the height direction of the battery cells, thereby improving the structural strength of the battery cells and ease of use.

According to a second aspect, a battery cell is provided, including:
an electrode assembly; and
a housing assembly, where the electrode assembly is accommodated in the housing assembly.

Based on the above technical solution, the battery cell provided herein adopts the housing assembly disclosed above, thereby also reducing the waste of space of the housing assembly along the height direction, improving the space utilization rate of the housing, and in turn, increasing the energy density of the battery cell.

In some embodiments, the battery cell further includes a current collector. The current collector is disposed at one end of the electrode assembly and electrically connected to a tab of the electrode assembly, the end being close to the end cap.

Based on the above technical solution, the electrode assembly is electrically connected to the current collector, so that the electrical energy of the electrode assembly can be output or input through the current collector.

In some embodiments, the current collector is welded to an inner periphery of the housing body, an inner periphery of the first housing section, an inner periphery of the second housing section, or the end cap.

Based on the above technical solution, the current collector can be welded to the housing or the end cap, so that the battery cell can use the housing as an electric energy input end or output end, or use the end cap as an electric energy input end or output end.

In some embodiments, the end cap clutches on to an inner periphery of the first housing section, and the current collector clutches on to an inner periphery of the first housing section or to the housing body.

Based on the above technical solution, the housing can support the current collector and the end cap separately, thereby improving the positional stability of the current collector and the end cap in the housing.

In some embodiments, the current collector clutches on to an inner periphery of the first housing section or to the housing body. The end cap clutches on to the current collector, and is spaced apart from the first housing section and the housing body.

Based on the above technical solution, the inner periphery of the first housing section or the housing body directly clutches the current collector but does not directly clutch the end cap. The end cap clutches on to the current collector. In this way, the end cap clutches on to the current collector, and clutches on to the inner periphery of the first housing section or to the housing body through the current collector, thereby implementing indirect clutching.

In some embodiments, the end cap clutches on to an inner periphery of the first housing section or to the housing body. At least a part of the current collector is accommodated in the receptacle, and is spaced apart from an inner periphery of the first housing section. The current collector is fixed to the end cap or an inner periphery of the housing body.

Based on the above technical solution, on the one hand, the current collector can be fixed in the housing through the end cap. On the other hand, the current collector can be fixed to the end cap, and the current collector can be fixed to the housing body, by welding separately. In this way, not only the current collector is fixed in the housing, but also the housing or the end cap can serve as an electrical energy output end or input end of the battery cell.

According to a third aspect, a battery is provided, including a plurality of battery cells.

Based on the above technical solution, the battery provided herein adopts the battery cell disclosed above, thereby also reducing the waste of space of the battery cell along the height direction, improving the utilization rate of the internal space of the battery, and in turn, increasing the energy density of the battery.

In some embodiments, an outer diameter of the second housing section is greater than an outer diameter of the housing body. The battery further includes a thermal management component. At least a part of the thermal management component is located in a space defined by an outer sidewall of the housing body, an outer sidewall of the first housing section, and an outer sidewall of the second housing section.

Based on the above technical solution, at least a part of the thermal management component can be located in the space defined by the outer sidewall of the housing body, the outer sidewall of the first housing section, and the outer sidewall of the second housing section, thereby efficiently utilizing the outer space brought by the increased dimensions of the first housing section and the second housing section in the width direction, and in turn, improving the utilization rate of the internal space of the battery and increasing the energy density of the battery.

According to a fourth aspect, an electrical device is provided, including a battery. The battery is configured to provide electrical energy.

Based on the above technical solution, the electrical device provided herein adopts the battery disclosed above, thereby also reducing the waste of space of the battery along the height direction, improving the space utilization rate of the electrical device, and in turn, increasing the energy density of the electrical device.

According to a fifth aspect, an assembling method of a battery cell is provided, including the following steps:
encasing: letting the electrode assembly be accommodated in the housing body of the housing;
end cap engagement: letting at least a part of the end cap be accommodated in the second housing section; and
packaging: using the end cap and the housing together to package the electrode assembly.

Based on the above technical solution, the inner diameter of the second housing section of the housing is greater than the inner diameter of the housing body, and the first housing section implements the transition between the inner periphery of the second housing section and the inner periphery of the housing body. Therefore, after being engaged, the end cap can clutch on to the inner periphery of the first housing section or to the housing body, thereby reducing the waste of space of the housing assembly along the height direction, improving the space utilization rate of the housing, and in turn, increasing the energy density of the battery cell.

In some embodiments, the packaging includes the following steps:
adhesive bonding: affixing an adhesive layer onto one side of the end cap, the side being oriented away from the electrode assembly;
crimp-sealing: bending the second housing section at an end away from the first housing section toward the end cap to form a crimp-sealing portion; and
heat sealing: heat-sealing the crimp-sealing portion and the end cap by use of the adhesive layer.

Based on the above technical solution, the assembling process of battery cells is very simple and time-saving, thereby improving the production efficiency of the battery cells. In addition, the connection between the housing and the end cap in these embodiments is more reliable and more pressure-resistant. In addition, the component (adhesive layer) configured to implement fixation between the housing and the end cap is smaller in size and more space-saving in footprint, thereby achieving a higher energy density of the battery cell.

In some embodiments, the encasing further includes:
disposing a current collector at one end of the electrode assembly, the end being close to the end cap; and electrically connecting the current collector to a tab of the electrode assembly; and
welding the current collector to the housing body, the first housing section, or the second housing section.

Based on the above technical solution, the housing is welded to the current collector, so that the housing can serve as an electrical energy input end or output end of the battery cell.

In some embodiments, the encasing further includes:
disposing a current collector at one end of the electrode assembly, the end being close to the end cap; and electrically connecting the current collector to a tab of the electrode assembly.

The assembling method further includes:
welding the current collector to the end cap.

Based on the above technical solution, the end cap is welded to the current collector, so that the end cap can serve as an electrical energy input end or output end of the battery cell.

### BRIEF DESCRIPTION OF DRAWINGS

To describe the technical solutions in some embodiments of this application more clearly, the following outlines the drawings to be used in the description of some exemplary embodiments of this application. Evidently, the drawings outlined below are merely some embodiments of this application. A person of ordinary skill in the art may derive other drawings from such drawings without making any creative efforts.
FIG. 1 is a schematic diagram of a battery cell according to some embodiments of this application;
FIG. 2 is a cross-sectional view of FIG. 1 sectioned along an A-A line;
FIG. 3 is a cross-sectional view of a housing assembly according to some embodiments of this application;
FIG. 4 is a close-up view of a part B shown in FIG. 3;
FIG. 5 is a close-up view I of a cross-sectional view of a housing assembly according to some other embodiments of this application;
FIG. 6 is a close-up view II of a cross-sectional view of a housing assembly according to some other embodiments of this application;
FIG. 7 is a close-up view III of a cross-sectional view of a housing assembly according to some other embodiments of this application;
FIG. 8 is a close-up view IV of a cross-sectional view of a housing assembly according to some other embodiments of this application;
FIG. 9 is a cross-sectional view V of a housing assembly according to some other embodiments of this application;
FIG. 10 is a close-up view of a part C shown in FIG. 9;
FIG. 11 is a close-up view of a part D shown in FIG. 2;
FIG. 12 is a close-up view I of a cross-sectional view of a battery cell according to some other embodiments of this application;
FIG. 13 is a close-up view II of a cross-sectional view of a battery cell according to some other embodiments of this application;
FIG. 14 is a close-up view III of a cross-sectional view of a battery cell according to some other embodiments of this application;
FIG. 15 is a close-up view IV of a cross-sectional view of a battery cell according to some other embodiments of this application;
FIG. 16 is a close-up view V of a cross-sectional view of a battery cell according to some other embodiments of this application;
FIG. 17 is a schematic exploded view of a battery according to some embodiments of this application;
FIG. 18 is a schematic diagram of a battery cell in coordination with a thermal management component according to some embodiments of this application;
FIG. 19 is a close-up view of a part E shown in FIG. 18;
FIG. 20 is a schematic diagram of a vehicle according to some embodiments of this application;
FIG. 21 is a flowchart of an assembling method of a battery cell according to some embodiments of this application;
FIG. 22 is a partial schematic view of a battery cell after end cap engagement according to some embodiments of this application;
FIG. 23 is a partial schematic diagram of a battery cell after pre-crimping according to some embodiments of this application; and
FIG. 24 is a partial schematic diagram of a battery cell after sealing according to some embodiments of this application.

### List of reference numerals:

1000-battery; 2000-controller; 3000-motor; 100-battery cell; 200-box; 210-first housing; 220-second housing; 300-thermal management component; 10-housing assembly; 20 - electrode assembly; 30-current collector; 11-housing; 1101-receptacle; 1102-clutching surface; 111-housing body; 112-first housing section; 113-second housing section; 1131-body portion; 1132-crimp-sealing portion; 12-end cap; 121-cover; 122-protruding column; 13-adhesive layer.

### DETAILED DESCRIPTION OF EMBODIMENTS

The following describes some embodiments of this application in detail. Examples of the embodiments are shown in the drawings, throughout which the same or similar reference numerals represent the same or similar components or the components of the same or similar functions. The embodiments described below with reference to the drawings are exemplary, and are intended to construe this application but not to limit this application.

Understandably, in the description of this application, a direction or positional relationship indicated by the terms such as "length", "width", "up", "down", "front", "back", "left", "right", "vertical", "horizontal", "top", "bottom", "in", and "out" is a direction or positional relationship based on the illustration in the drawings, and is merely intended for ease or brevity of description of this application, but does not necessarily mean or imply that the indicated device or component is located in the specified direction or constructed or operated in the specified direction. Therefore, such terms are not to be understood as a limitation on this application.

In addition, the technical terms such as "first" and "second" are used merely for ease of description, but not to indicate or imply relative importance or implicitly specify the number of technical features mentioned. Therefore, a feature defined with "first" or "second" may explicitly or implicitly include one or more of the features.

In the description of this application, unless otherwise expressly specified, "a plurality of" means at least two, and the term "at least two" includes two. Correspondingly, "a plurality of" means at least two, and includes two.

In the description of this application, unless otherwise expressly specified and defined, the terms such as "mount", "concatenate", "connect", and "fix" are generic in a broad sense, for example, mean a fixed connection, a detachable connection, or a one-piece configuration; or mean a mechanical connection or an electrical connection; or mean a direct connection or an indirect connection implemented through an intermediary; or mean internal communication between two components or interaction between two components. A person of ordinary skill in the art is able to understand the specific meanings of the terms in this application according to specific situations.

In the description of this application, the term "and/or" merely indicates a relationship between related items, and represents three possible relationships. For example, "A and/or B" may represent the following three circumstances: A alone, both A and B, and B alone. In addition, the character "/" herein generally indicates an "or" relationship between the item preceding the character and the item following the character.

In some circumstances, after an electrode assembly of a battery cell is put into a housing, an end cap usually needs to be disposed at the opening of the housing to seal the electrode assembly. However, the disposed end cap is prone to waste much internal space of the housing and impair the energy density of the battery cell.

As an example, currently, an annular roll groove is typically disposed on the outer periphery of the housing, so that an annular step is formed on the inner periphery of the housing at a position corresponding to the roll groove. In this way, the end cap can directly or indirectly clutch on to the step. However, with the roll groove disposed in such a way, on the one hand, in order to form the roll groove, the position corresponding to the roll groove on the housing is of a specified height, thereby causing a waste of space of the housing in the height direction. On the other hand, the inner diameter of the housing at the position corresponding to the roll groove is reduced, thereby reducing the internal space of the housing on condition that the volume of the housing is predetermined, and in turn, reducing the available space of the housing.

The above arrangement reduces the space utilization rate of the housing, thereby reducing the energy density of the battery cell.

Based on the above considerations, in order to alleviate the above technical problems, after in-depth research, the inventor has designed a housing assembly, that is, the housing assembly mentioned in the first aspect of this application. A housing body, a first housing section, and a second housing section are disposed in sequence in the height direction of the housing assembly. The inner diameter of the second housing section is greater than the inner diameter of the housing body, and the first housing section implements the transition between the inner diameter of the housing body and the inner diameter of the second housing section. When the end cap works together with the housing body to package an electrode assembly, the end cap clutches on to the inner periphery of the first housing section or to the housing body, thereby reducing the waste of space between the end cap and the electrode assembly in the receptacle, that is, reducing the waste of space of the housing assembly in the height direction, and in turn, increasing the energy density of the battery cell.

It is hereby noted that the housing assembly referred to herein may be a component of a battery cell, the component being configured to define an internal environment of the battery cell to accommodate the electrode assembly. Alternatively, depending on actual application requirements, the housing assembly may be configured to accommodate a component other than the electrode assembly.

The battery cell means a minimum unit that stores and outputs electrical energy. Each battery cell may be, but is not limited to, a secondary battery or primary battery; or, may be a lithium-sulfur battery, a sodium-ion battery, or a magnesium-ion battery. The battery cell may be in a shape such as a cylinder, a flat body, a cuboid, or other shapes.

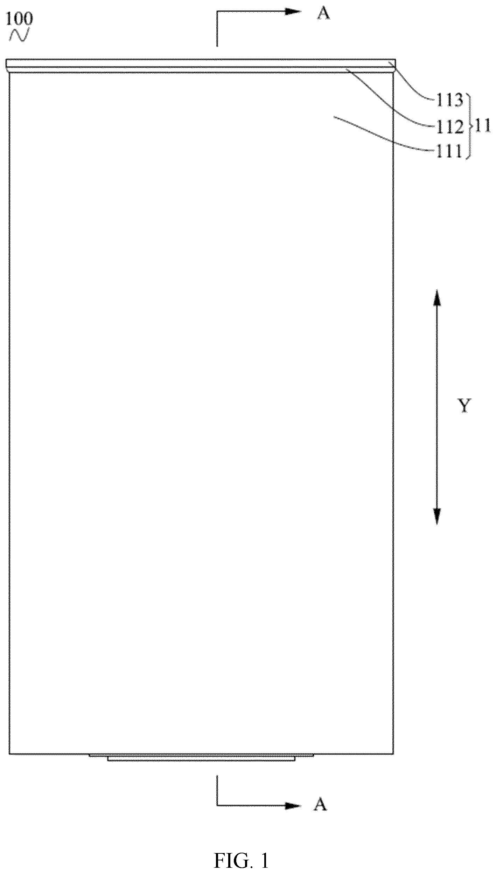

Referring to FIG. 1 to FIG. 3, the battery cell 100 includes a housing assembly 10 and an electrode assembly 20.

The housing assembly 10 is a component configured to form an internal environment of the battery cell 100. The internal environment of the housing assembly 10 is configured to accommodate the electrode assembly 20 and an electrolyte solution.

The electrode assembly 20 is a component in which electrochemical reactions occur in the battery cell 100. The electrode assembly 20 is primarily formed of a positive electrode plate and a negative electrode plate that are wound or stacked together. A separator is disposed between the positive electrode plate and the negative electrode plate. The parts, coated with an active material, of the positive electrode plate and the negative electrode plate, constitute a body portion of the electrode assembly 20. The part, coated with no active material, of the positive electrode plate or negative electrode plate, constitutes a tab. The tab of the positive electrode plate is a positive tab, and the tab of the negative electrode plate is a negative tab. The positive tab and the negative tab may be located together at one end of the body portion or located at two ends of the body portion respectively. The tab is a current transmission end of the electrode assembly 20, and is configured to transmit a current.

The battery cell 100 further includes an electrolyte solution. The electrolyte solution infiltrates the electrode assembly 20. When the battery cell 100 is a lithium-ion battery 1000, lithium ions can move to the positive electrode plate through the electrolyte solution, and be inserted in a positive active material of the positive electrode plate. The lithium ions can also move to the negative electrode plate through the electrolyte solution, and be inserted in a negative active material of the negative electrode plate.

To facilitate description of the specific structure of the housing assembly 10, the following description mainly uses an example in which the housing assembly 10 is configured to accommodate the electrode assembly 20 (that is, the housing assembly 10 is applied to a battery cell 100).

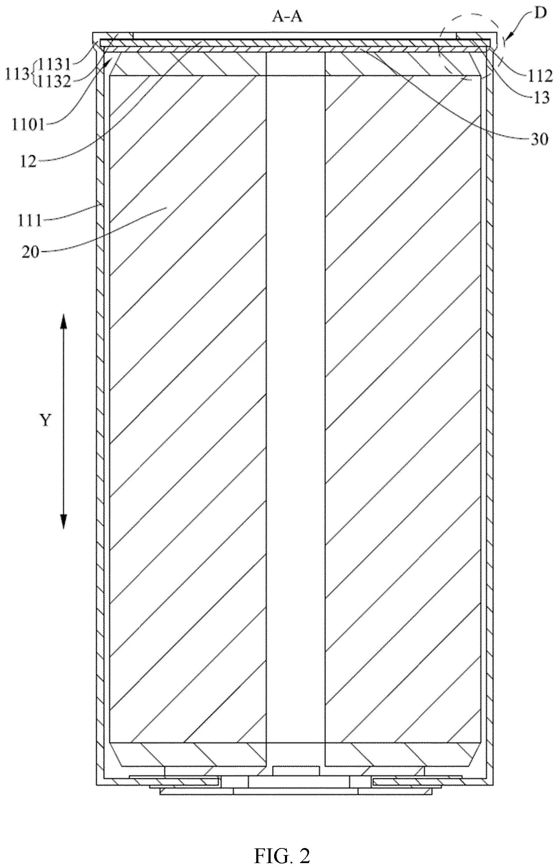

Referring to FIG. 2 to FIG. 6, the housing assembly 10 includes a housing 11 and an end cap 12. The housing 11 includes a housing body 111, a first housing section 112, and a second housing section 113. The housing body 111 includes a receptacle 1101. The receptacle 1101 is configured to accommodate the electrode assembly 20. The first housing section 112 is disposed at an edge of an opening of the receptacle 1101. The second housing section 113 is disposed at one end of the first housing section 112, the end being away from the housing body 111. An inner diameter of the second housing section 113 is greater than an inner diameter of the housing body 111. The end cap 12 is at least partially accommodated in the second housing section 113 and configured to work together with the housing 11 to package the electrode assembly 20.

The housing body 111, the first housing section 112, and the second housing section 113 are connected in sequence along a preset direction. For ease of description, it is defined that the distribution direction of the housing body 111, the first housing section 112, and the second housing section 113 is parallel to the height direction of the housing 11, that is, the height direction of the battery cell 100, as indicated by the Y-direction in the drawing. In some application scenarios, the Y-direction may be defined as the length direction of the battery cell 100, or even defined as the width direction of the battery cell 100, which is not be enumerated exhaustively here. In each embodiment of this application, the Y-direction is parallel to the height direction of the housing 11.

The housing body 111, the first housing section 112, the second housing section 113, and the end cap 12 may be made of a variety of materials such as copper, iron, aluminum, stainless steel, aluminum alloy, or plastic. The materials are not particularly limited herein.

The receptacle 1101 is a groove with an opening. The opening of the receptacle 1101 is created at one end of the housing body 111 along the Y-direction. In other words, the opening of the receptacle 1101 is substantially flush with the end of the housing body 111. Both the first housing section 112 and the second housing section 113 include a flow channel that runs through along the Y-direction. Both ends of the first housing section 112 and the second housing section 113 along the Y-direction are opened. One end of the first housing section 112 is connected to the edge of the opening of the housing body 111, and the other end of the first housing section 112 is connected to the edge of the opening at one end of the second housing section 113. For the housing 11, the flow channel of the second housing section 113, the flow channel of the first housing section 112, and the receptacle 1101 communicate with each other sequentially along the Y-direction. Based on this, when the electrode assembly 20 is put into the housing, the electrode assembly 20 may enter the second housing section 113 from the opening at the other end of the second housing section 113, and then pass through the second housing section 113 and the first housing section 112 sequentially, and finally enter the receptacle 1101 through the opening of the housing body 111.

The housing body 111 may be a cylindrical housing, a square housing, or in another a shape. The specific shape of the housing body may depend on the shape and size of the electrode assembly 20. Correspondingly, the shapes of the first housing section 112 and the second housing section 113 may be set depending on the shape of the housing body 111. The shapes of the housing body 111, the first housing section 112, and the second housing section 113 may depend on the cross-sectional contour shape of the housing 11. The cross-section of the housing 11 means a cross-section of the housing 11 perpendicular to the Y-direction.

The inner diameter of the housing body 111 means a cross-sectional area of the inner contour of the housing body 111. The inner diameter of the second housing section 113 means a cross-sectional area of the inner contour of the second housing section 113. That the inner diameter of the second housing section 113 is greater than the inner diameter of the housing body 111 means that the cross-sectional area of the inner contour of the second housing section 113 is greater than the cross-sectional area of the inner contour of the housing body 111. One end of the second housing section 113 is connected to the edge of the opening at one end of the first housing section 112, the end being away from the housing body 111. In this way, in a front view visually looking at the cross-section perpendicular to the Y-direction of the housing body 111, the inner peripheral wall of the second housing section 113 is peripherally located outside the inner peripheral wall of the first housing section 112.

The disposed first housing section 112 is primarily intended to implement connection between a housing body 111 and the second housing section 113 of different inner diameters, and implement transition of different inner diameters between the housing body 111 and the second housing section 113, that is, implement transition between the inner periphery of the housing body 111 and the inner periphery of the second housing section 113. Because the inner diameter of the second housing section 113 is set to be greater than the inner diameter of the housing body 111, the dimension of the outer contour of the end cap 12 may be set accordingly during formation of the end cap 12, so that at least a part of the end cap 12 is accommodated in the second housing section 113 without falling into the receptacle 1101. When the electrode assembly 20 is packaged with the end cap 12, the end cap 12 can clutch on to the inner periphery of the first housing section 112 or the housing body 111, so as to fit onto the opening of the receptacle 1101, and work together with the housing 11 to package the electrode assembly 20.

The end cap 12 and the housing 11 working together to package the electrode assembly 20 mean that the end cap 12 covers the opening of the receptacle 1101, and works together with the housing body 111, the first housing section 112, and the second housing section 113 to package the electrode assembly 20.

At least a part of the end cap 12 being accommodated in the second housing section 113 may be: the entire end cap 12 is accommodated in the second housing section 113; or, one part of the end cap 12 is accommodated in the second housing section 113, and another part of the end cap is accommodated outside the second housing section 113.

Based on the above structure, with the housing assembly 10 according to an embodiment of this application, when the electrode assembly 20 is packaged with the end cap 12, the end cap 12 can clutch on to the inner periphery of the first housing section 112 or the housing body 111, thereby eliminating the need to dispose a roll groove, reducing the waste of space of the housing assembly 10 along the height direction, improving the space utilization rate of the housing 11, and in turn, increasing the energy density of the battery cell 100.

Specifically, on the one hand, when the end cap 12 clutches on to the opening of the housing body 111, the distance between the end cap 12 and the receptacle 1101 can be greatly reduced, thereby directly reducing the waste of space between the end cap 12 and the receptacle 1101, that is, reducing the waste of space of the housing assembly 10 along the height direction.

When the end cap 12 clutches on to the inner periphery of the first housing section 112, because the first housing section 112 is mainly configured to implement transition between the housing body 111 and the second housing section 113, no roll groove needs to be formed, and therefore, it is not necessary to allow a height for forming a roll groove. Therefore, the dimension of the first housing section 112 along the height direction can be made smaller, thereby reducing the distance between the end cap 12 and the receptacle 1101, and in turn, directly reducing the waste of space between the end cap 12 and the receptacle 1101, that is, reducing the waste of space of the housing assembly 10 along the height direction.

On the other hand, the inner diameter of the second housing section 113 is greater than the inner diameter of the housing body 111, and the first housing section 112 is mainly configured to implement transition between the housing body 111 and the second housing section 113. The inner periphery of the first housing section 112 can clutch the end cap 12. In this way, the reduction in the inner diameter of the first housing section 112, as in a case where a roll groove is disposed, is not required. In other words, the housing 11 can expand outward from the opening of the housing body 111 to form the first housing section 112 and the second housing section 113 sequentially at the opening of the housing body 111. Therefore, the inner diameter of the first housing section 112 may be greater than the inner diameter of the housing body 111, so that the first housing section 112 can also accommodate the electrode assembly 20. Specifically, when the end cap 12 clutches on to the inner periphery of the first housing section 112 so that a spacing is allowed between the end cap 12 and the receptacle 1101, the height dimension of the electrode assembly 20 may be made larger to make at least a part of the electrode assembly 20 also accommodated in first housing section 112. Moreover, the spacing between the end cap 12 and the receptacle 1101 may also be used for accommodating the current collector 30 or other components. Such arrangement can improve the space utilization rate of the housing 11. On condition that the volume of the casing 11 is predetermined, the arrangement can increase the volume of the electrode assembly 20, so as to increase the energy density of the battery cell 100. Correspondingly, on condition that the volume of the electrode assembly 20 is predetermined, the above arrangement can reduce the height dimension of the housing 11, thereby avoiding the waste of space in the height direction of the housing 11 caused by an excessive height dimension of the housing 11 that arises from the disposed roll groove in some circumstances.

In addition, the housing assembly 10 provided herein eliminates the process of the roll groove, thereby improving the efficiency of the end cap 12 in sealing the receptacle 1101 of the housing 11. Moreover, the disposition of the housing assembly also simplifies the assembling operation of the battery cell 100, and improves the production efficiency of the battery cell 100.

Based on the above structure, the number of end caps 12 may be one or two. When the number of end caps 12 is two, the two end caps 12 may be connected to the housing 11 in the same way or different ways. Optionally, when the two end caps 12 are connected to the housing 11 in the same way, the receptacle 1101 is a flow channel that runs through the housing body 111 along the height direction (Y-direction), and the receptacle 1101 is opened at both ends along the height direction. The first housing section 112 is disposed and connected to the edge of the opening at both ends of the housing body 111 along the height direction. The second housing section 113 is disposed at one end of each first housing section 112, the end being away from the housing body 111. At least a part of each end cap 12 is accommodated in the corresponding second housing section 113, and clutches on to the inner periphery of the corresponding first housing section 112 or to the housing body 111.

Based on the above structure, the end cap 12 may directly clutch on to the inner periphery of the first housing section 112 or to the housing body 111, or indirectly clutch on to the inner periphery of the first housing section 112 or to the housing body 111. The indirect clutching means that an intermediate component exists between the end cap 12 and the inner periphery of the first housing section 112, and between the end cap 12 and the housing body 111. The intermediate component clutches on to the inner periphery of the first housing section 112 or to the housing body 111, and the end cap 12 clutches on to the intermediate component. In this way, the end cap 12 indirectly clutches on to the inner periphery of the first housing section 112 or to the housing body 111 through the intermediate component. The intermediate component in this embodiment may be a current collector 30 or another component. The current collector 30 will be described in a corresponding embodiment later herein, and is not described in detail here.

In addition, at least a part of the end cap 12 being accommodated in the second housing section 113 may be: the entire end cap 12 is accommodated in the second housing section 113; or, one part of the end cap 12 along the Y-direction is accommodated in the second housing section 113, and another part of the end cap is accommodated in the first housing section 112.

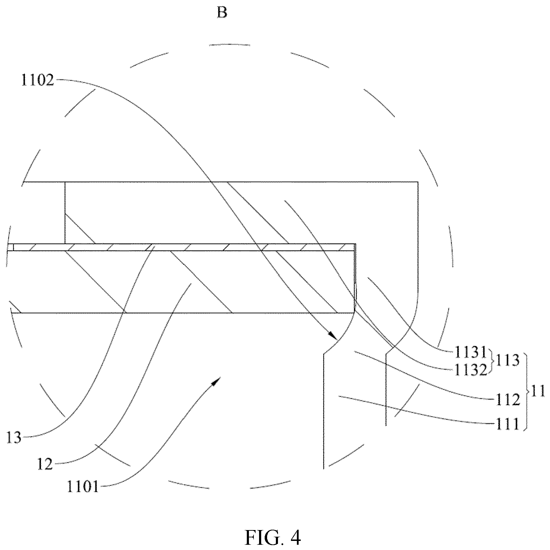

In some embodiments, referring to FIG. 4, when the end cap 12 is fully accommodated in the second housing section 113, the end cap 12 clutches on to the inner periphery of the first housing section 112.

Specifically, as shown in FIG. 4, the end cap 12 clutches on to the inner periphery of the first housing section 112 at a position connected to the second housing section 113. In this case, the outer diameter of the end cap 12 at the position for clutching on to the first housing section 112 is equal to the inner diameter of the first housing section 112 at the position connected to the second housing section 113. In this way, the end cap 12 can lap the first housing section 112 at the position connected to the second housing section 113, so that the inner periphery of the first housing section 112 at the position connected to the second housing section 113 can provide support for the end cap 12.

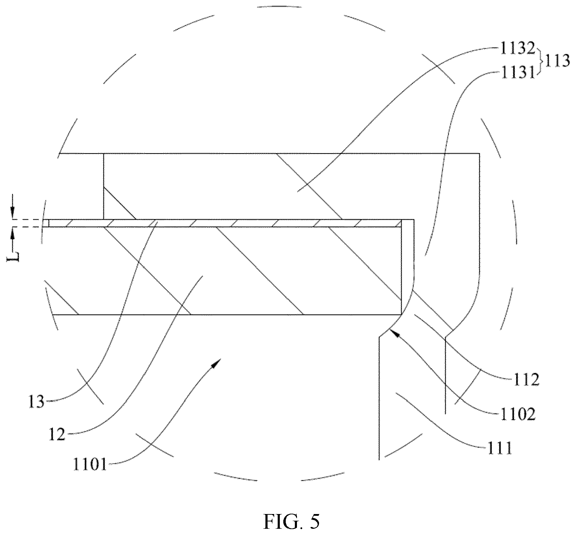

Alternatively, in some other embodiments, referring to FIG. 5, the end cap 12 is not fully accommodated in the second housing section 113. Instead, a part of the end cap 12 is accommodated in the second housing section 113, and another part of the end cap is accommodated in the first housing section 112, and the end cap 12 clutches on to the inner periphery of the first housing section 112.

Specifically, as shown in FIG. 5, a part of the end cap 12 along the Y-direction is accommodated in the second housing section 113, and another part of the end cap is accommodated in the first housing section 112. The end cap 12 clutches on to the inner periphery of the first housing section 112 at a position located between the second housing section 113 and the housing body 111. In this case, the outer diameter of the end cap 12 at a position used for clutching on to the first housing section 112 is less than the inner diameter of the second housing section 113. For example, as shown in FIG. 5, the end cap 12 clutches on to the inner periphery of the first housing section 112 in the middle of the first housing section along the Y-direction. In this way, the first housing section 112 can provide sufficient support strength for the end cap 12.

It is hereby noted that, by reducing the outer diameter of the end cap 12 in FIG. 4 and causing the end cap 12 in FIG. 4 to move toward the housing body 111 along the Y-direction, the end cap 12 can be made to clutch on to the inner periphery of the first housing section 112 at the position between the second housing section 113 and the housing body 111 on condition that: the dimension of the first housing section 112 along the Y-direction in this technical solution is the same as the dimension of the first housing section 112 along the Y-direction in FIG. 4; and the dimension of the end cap 12 along the Y-direction in this technical solution is the same as the dimension of the end cap 12 along the Y-direction in FIG. 4. In this case, along the Y-direction, the dimension of the end cap 12 accommodated in the second housing section 113 is less than the dimension of the end cap 12 accommodated in the second housing section 113 in FIG. 4, so that the dimension of the second housing section 113 along the Y-direction in this technical solution can be made smaller than that in FIG. 4. Therefore, in contrast to the technical solution in FIG. 4, the height dimension of the housing 11 in this technical solution is smaller, thereby achieving a higher energy density of the battery cell 100. Moreover, in contrast to the technical solution in FIG. 4, the end cap 12 in this technical solution moves toward the housing body 111 along the Y-direction, so that the spacing between the end cap 12 and the receptacle 1101 along the Y-direction is smaller than the spacing between the end cap 12 and the receptacle in FIG. 4, thereby reducing the waste of the space between the end cap 12 and the receptacle 1101, and in turn, more efficiently reducing the waste of space in the height direction of the housing 11.

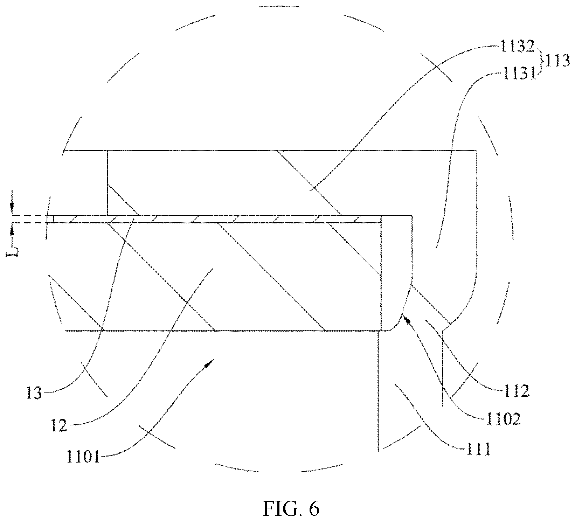

Alternatively, in some other embodiments, referring to FIG. 6, the end cap 12 does not clutch on to the inner periphery of the first housing section 112. Instead, a part of the end cap 12 is accommodated in the second housing section 113, and another part of the end cap is accommodated in the first housing section 112, and the end cap 12 clutches on to the housing body 111.

It is hereby noted that, because the end cap 12 in this technical solution clutches on to the housing body 111 but the end caps 12 in FIG. 4 and 5 both clutch on to the inner periphery of the first housing section 112, the spacing between the end cap 12 and the receptacle 1101 along the Y-direction in this technical solution is smaller than that in FIG. 4 and FIG. 5. Therefore, in contrast to the technical solutions shown in FIG. 4 and FIG. 5, the waste of space between the end cap 12 and the receptacle 1101 in this technical solution is reduced. Moreover, on condition that the dimension of the end cap 12 along the Y-direction in this technical solution is the same as the dimension of the end cap 12 along the Y-direction in FIG. 4 and FIG. 5, and on condition that the dimension of the first housing section 112 along the Y-direction in this technical solution is the same as the dimension of the first housing section 112 along the Y-direction in FIG. 4 and FIG. 5, the distance of movement of the end cap 12 toward the housing body 111 in this technical solution is greater than that in FIG. 4 and FIG. 5. In this way, the dimension by which the end cap 12 is accommodated in the second housing section 113 is smaller than that in FIG. 4 and FIG. 5, so that the dimension of the second housing section 113 along the Y-direction in this technical solution can be made smaller than that in FIG. 4 and FIG. 5. Therefore, in contrast to the technical solutions in FIG. 4 and FIG. 5, the height dimension of the housing 11 in this technical solution is smaller, thereby achieving a higher energy density of the battery cell 100.

Based on the above technical solution, the end cap 12 can be fully accommodated in the second housing section 113 to clutch on to the inner periphery of the first housing section 112. Alternatively, a part of the end cap can be accommodated in the second housing section 113 to clutch on to the inner periphery of the first housing section 112 or to the housing body 111. In this way, on the basis that the inner diameter of the second housing section 113 is greater than the inner diameter of the housing body 111, when the end cap 12 is at least partially accommodated in the second housing section 113, the end cap 12 can fit and cover the opening of the receptacle 1101, and can be supported by the housing 11.

In some embodiments, referring to FIG. 4, FIG. 5, and FIG. 7 together, a clutching surface 1102 is disposed on the inner periphery of the first housing section 112. The clutching surface 1102 is configured to clutch the end cap 12.

The clutching surface 1102 can directly support the end cap 12. Alternatively, an intermediate component may be disposed between the clutching surface 1102 and the end cap 12, the intermediate component clutches on to the clutching surface 1102, and the end cap 12 clutches on to the intermediate component, so that the end cap 12 clutches on to the clutching surface 1102 through the intermediate component.

In some embodiments, as shown in FIG. 4 and FIG. 5, the clutching surface 1102 flares out from the housing body 111 to the second housing section 113.

Understandably, the inner diameter of the first housing section 112 gradually increases from the housing body 111 to the second housing section 113.

Such arrangement implements a smooth transition between different inner diameters of the housing body 111 and the second housing section 113. When at least a part of the end cap 12 is accommodated in the second housing section 113, based on the outer diameter of the end cap 12, the end cap 12 can clutch on to the clutching surface 1102 at various positions along the Y-direction, thereby improving the flexibility of the end cap 12 clutching on to the inner periphery of the first housing section 112, and lowering the design requirements on the inner diameter of the first housing section 112.

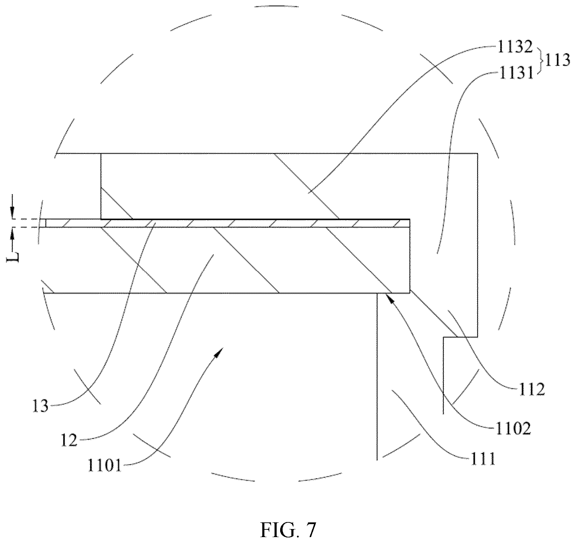

Alternatively, in some other embodiments, as shown in FIG. 7, the clutching surface 1102 is a plane perpendicular to the distribution direction of the first housing section 112 and the second housing section 113. How the end cap 12 in FIG. 7 clutches on to the inner periphery of the first housing section 112 is the same as and may be learned from the technical solution shown in FIG. 4. In other words, the only difference between FIG. 7 and FIG. 4 lies in the shape of the clutching surface 1102 in FIG. 4 and FIG. 7.

Arranged in this way, when the end cap 12 is accommodated in the second housing section 113, the end cap 12 can clutch on to the clutching surface 1102 along the Y-direction. In this case, the clutching surface 1102 is a plane perpendicular to the Y-direction, thereby improving the stability of the clutching surface 1102 in supporting the end cap 12.

In some embodiments, referring to FIG. 4, FIG. 5, and FIG. 8 together, the clutching surface 1102 flares out from the housing body 111 to the second housing section 113, and the clutching surface 1102 is a flat face or an arc face.

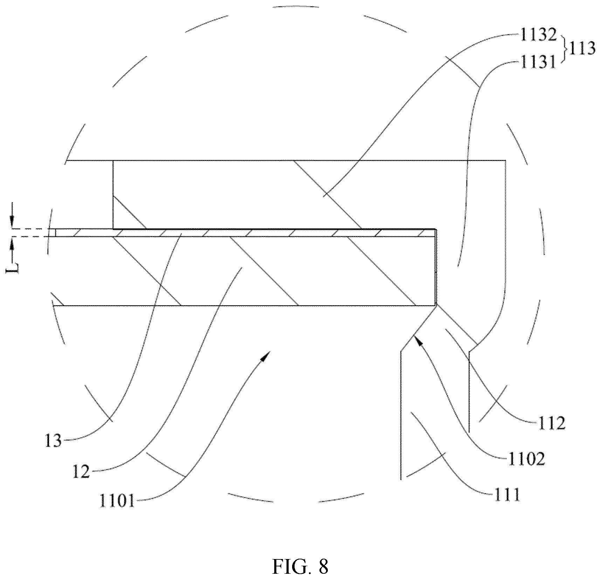

The scenario in which the clutching surface 1102 flares out from the housing body 111 to the second housing section 113 and the clutching surface 1102 is a flat face may be understood as: the clutching surface 1102 is a bevel face inclined against the Y-direction, as specifically shown in FIG. 8. How the end cap 12 in FIG. 8 clutches on to the inner periphery of the first housing section 112 is the same as and may be learned from the technical solutions shown in FIG. 4 and FIG. 7. In other words, the only difference between FIG. 8 and FIG. 4, and between FIG. 8 and FIG. 7, lies in the shape of the clutching surface 1102.

The clutching surface 1102, which is an arc face, may be an inwardly concave arc face, as shown in FIG. 4 and FIG. 5. Alternatively, the clutching surface 1102 may be an inwardly convex arc face.

Based on the above technical solution, no matter whether the clutching surface 1102 is a flat face or an arc face, a smooth transition can be implemented between the inner diameter of the housing body 111 and the inner diameter of the second housing section 113.

In some embodiments, the end cap 12 is in interference fit with the second housing section 113.

As shown in FIG. 4, FIG. 7, and FIG. 8, the end cap 12 is fully accommodated in the second housing section 113, and is in interference fit with the second housing section 113. Alternatively, in some other embodiments, a part of the end cap 12 may be accommodated in the second housing section 113, and another part of the end cap may be accommodated in the first housing section 112. The part, located in the second housing section 113, of the end cap 12 is in interference fit with the second housing section 113.

Based on the above technical solution, the end cap 12 is in interference fit with the second housing section 113, thereby improving the connection strength between the end cap 12 and the second housing section 113, and in turn, improving the pressure resistance of the end cap 12, and reducing a clearance between the outer periphery of the end cap 12 and the inner periphery of the second housing section 113. In a crimp-sealing operation to be performed subsequently for the second housing section 113, the end cap 12 is prevented from shifting in the second housing section 113 in an unpredictable direction due to the crimp-sealing, thereby improving the consistency of the battery cells 100.

In some embodiments, referring to FIG. 4 to FIG. 8 together, an outer diameter of the second housing section 113 is greater than an outer diameter of the housing body 111.

The outer diameter of the housing body 111 means a cross-sectional area of the outer contour of the housing body 111. The outer diameter of the second housing section 113 means a cross-sectional area of the outer contour of the second housing section 113. That the outer diameter of the second housing section 113 is greater than the outer diameter of the housing body 111 means that the cross-sectional area of the outer contour of the second housing section 113 is greater than the cross-sectional area of the outer contour of the housing body 111.

When disposing the housing 11, the opening of the first housing body 111 may be directly expanded outward to form the first housing section 112 and the second housing section 113, so that the inner diameter of the housing body 111 is less than the inner diameter of the second housing section 113, thereby avoiding the need to directly reduce the wall thickness of the second housing section 113 to make the inner diameter of the second housing section 113 greater than the inner diameter of the housing body 111. In the housing 11 formed in such a way, the outer diameter of the second housing section 113 is greater than the outer diameter of the housing body 111. In this way, both the housing body 111 and the second housing section 113 possess an appropriate wall thickness, thereby alleviating the problem that the sealing effect of the housing 11 on the electrode assembly 20 is inferior and the fixing effect of the housing 11 on the end cap 12 is inferior due to a deficient wall thickness of the second housing section 113, and achieving relatively high structural strength of the housing 11.

In addition, the first housing section 112 is also primarily configured to implement transition between the outer periphery of the housing body 111 and the outer periphery of the second housing section 113. The manner of the transition may be learned with reference to the manner of transition implemented by the first housing section 112 between the inner periphery of the housing body 111 and the inner periphery of the second housing section 113. For example, a step may be disposed on the outer periphery of the first housing section 112, and the outer periphery of the housing body 111 is transitioned to the outer periphery of the second housing section 113 through the step. For another example, a bevel face or an arc face is disposed on the outer periphery of the first housing section 112, so that the outer periphery of the housing body 111 is smoothly transitioned to the outer periphery of the second housing section 113 through the bevel face or arc face.

Arranged in this way, the housing 11 can be directly formed by stamping, so as to obtain the housing body 111, the first housing section 112, and the second housing section 113. This makes the molding operation of the housing 11 very simple, simplifies the molding process, and improves the molding efficiency of the battery cell 100.

In some embodiments, referring to FIG. 2 and FIG. 4 to FIG. 8 together, a crimp-sealing portion 1132 is disposed at one end of the second housing section 113, the end being away from the first housing section 112. The crimp-sealing portion 1132 is bent toward the end cap 12 from the second housing section 113, and the crimp-sealing portion 1132 is constrained on one side of the end cap 12, the side being oriented away from the receptacle 1101.

Understandably, as shown in the drawings, the second housing section 113 includes a body portion 1131 and the crimp-sealing portion 1132. The body portion 1131 is connected to the edge of the opening at one end of the first housing section 112, the end being away from the housing body 111. The end cap 12 is at least partially accommodated in the body portion 1131. The crimp-sealing portion 1132 is disposed at one end of the body portion 1131 and bent toward the end cap 12, the end being away from the first housing section 112.

The crimp-sealing portion 1132 is located at the edge on one side of the end cap 12, the side being oriented away from the receptacle 1101.

The crimp-sealing portion 1132 may be a block-shaped or ring structure. When the crimp-sealing portion 1132 is a ring structure, the crimp-sealing portion 1132 is disposed at the outer peripheral edge on one side of the end cap 12, the side being oriented away from the receptacle 1101, thereby improving the effect of the crimp-sealing portion 1132 in constraining the end cap 12. When the crimp-sealing portion 1132 is block-shaped, the number of the crimp-sealing portions 1132 may be one or more. When the number of the crimp-sealing portions 1132 is plural, the plurality of crimp-sealing portions 1132 are distributed at intervals on the outer peripheral edge on one side of the end cap 12 along the circumferential direction, the side being oriented away from the receptacle 1101.

In practical applications, after the electrode assembly 20 is put into the housing, at least a part of the end cap 12 is accommodated in the second housing section 113 and fits and covers the opening of the receptacle 1101. One end, away from the first housing section 112, of the second housing section 113 is bent toward the end cap 12, so that a crimp-sealing portion 1132 is formed at one end, away from the first housing section 112, of the second housing section 113. The crimp-sealing portion 1132 is located on one side of the end cap 12, the side being oriented away from the receptacle 1101. In this case, one side of the end cap 12 along the Y-direction is supported on the inner periphery of the first housing section 112 or on the housing body 111, and the other side of the end cap 12 along the Y-direction is constrained at the crimp-sealing portion 1132, thereby constraining the movement or position of the end cap 12 relative to the housing 11 along the Y-direction, and in turn, increasing the connection strength between the end cap 12 and the housing 11.

Based on the above technical solution, the movement or position of the end cap 12 relative to the housing 11 along the Y-direction is constrained, thereby increasing the connection strength between the end cap 12 and the housing 11. Moreover, the movement of the end cap 12 is stopped at the crimp-sealing portion 1132, thereby alleviating the problem that the end cap 12 is prone to rush out of the housing 11 under a high pressure, and in turn, increasing the pressure resistance of the end cap 12.

In some embodiments, referring to FIG. 4 to FIG. 8 together, an adhesive layer 13 is disposed between the crimp-sealing portion 1132 and the end cap 12. The adhesive layer 13 is configured to seal the crimp-sealing portion 1132 and the end cap 12.

The adhesive layer 13 may be an adhesive layer 13 made of a variety of polymer materials such as PP, PET, PC, or PE. The adhesive layer 13 may be single-layer or multi-layer adhesive.

In practical applications, the adhesive layer 13 may be disposed on one side of the end cap 12. After the electrode assembly 20 is put into the housing, at least a part of the end cap 12 is accommodated in the second housing section 113. One side, not overlaid with the adhesive layer 13, of the end cap 12 clutches on to the inner periphery of the first housing section 112 or to the housing body 111. Subsequently, one end, away from the first housing section 112, of the second housing section 113 is bent toward the end cap 12, so that a crimp-sealing portion 1132 is formed at one end, away from the first housing section 112, of the second housing section 113. The crimp-sealing portion is connected to the end cap 12 by the adhesive layer 13.

It is hereby noted that, in some circumstances, a rubber ring is usually put around the end cap 12 peripherally. The outer periphery of the rubber ring abuts against the inner periphery of the housing 11 to implement sealing between the end cap 12 and the housing 11. The rubber ring is primarily configured to implement sealing between the end cap 12 and the housing 11, but without being able to increase connection strength between the end cap 12 and the housing 11. To achieve a good sealing effect, the thickness of the rubber ring is set to a relatively large value, generally greater than 0.7 mm.

In this technical solution, the adhesive layer 13 is disposed between the crimp-sealing portion 1132 and the end cap 12. On the one hand, the adhesive layer implements fixation between the end cap 12 and the housing 11, and prevents the end cap 12 from being detached from the housing 11 due to damage to the rubber ring in the middle or due to extrusion by an external force, thereby improving the reliability of connection between the end cap 12 and the housing 11, and increasing the pressure resistance of the end cap 12. On the other hand, the adhesive layer 13 also seals the clearance between the end cap 12 and the second housing section 113. The thickness of the adhesive layer 13 does not need to be very large. As long as the thickness is enough to implement fixation between the crimp-sealing portion 1132 and the end cap 12, the thickness can achieve the sealing effect at the same time. In this way, no rubber ring is required to occupy the internal space of the housing 11, thereby improving the space utilization rate of the housing 11. Still on the other hand, after the electrode assembly 20 is put into the housing, at least a part of the end cap 12 is accommodated in the second housing section 113, and finally the end cap is crimp-sealed, so as to fix the crimp-sealing portion 1132 to the end cap 12 through the adhesive layer 13. In this way, the assembling operation of battery cells 100 is very simple and easy to implement, thereby shortening the assembling time of the battery cells 100 and improving the production efficiency of the battery cells 100.

Optionally, the adhesive layer 13 may be heated to implement fixation between the end cap 12 and the crimp-sealing portion 1132. To be specific, the adhesive layer 13 is a thermal bonding adhesive. The adhesive layer 13 can be fixed to the crimp-sealing portion 1132 and the end cap 12 when heated. The melting point of the adhesive layer 13 is set to less than 200 °C. In this way, when the adhesive layer 13 implements fixation between the end cap 12 and the crimp-sealing portion 1132, the temperature will not adversely affect the electrode assembly 20. The melting point of the adhesive layer 13 may range from 120 °C to 200 °C.

Optionally, the bonding force of the adhesive layer 13 to a metal is greater than 2 N/ mm, thereby achieving relatively high reliability of connection between the end cap 12 and the crimp-sealing portion 1132.

Optionally, the adhesive layer 13 is highly resistant to an electrolyte solution, thereby being able to maintain high strength of connection to the end cap 12 and the crimp-sealing portion 1132 even when exposed to the electrolyte solution.

In some embodiments, referring to FIG. 4 to FIG. 8 together, the thickness of the adhesive layer 13 ranges from 50 µm to 2 mm.

The thickness of the adhesive layer 13 means a dimension L of the adhesive layer 13 along the Y-direction. The dimension L may be 60 µm, 70 µm, 80 µm, 90 µm, 200 µm, 300 µm, 400 µm, 1 mm, 1.5 mm, or the like, as long as the value falls within the range of 50 µm to 2 mm.

Generally, the thickness of the adhesive layer 13 is set to 100 µm, which is enough to implement a reliable connection between the end cap 12 and the crimp-sealing portion 1132.

Based on the above technical solution, the thickness of the adhesive layer 13 falls within an appropriate range. Therefore, the adhesive layer 13 can implement a firm connection between the crimp-sealing portion 1132 and the end cap 12, and additionally, can reduce the space occupied by the adhesive layer 13 in the housing 11, thereby increasing the energy density of the battery cell 100.

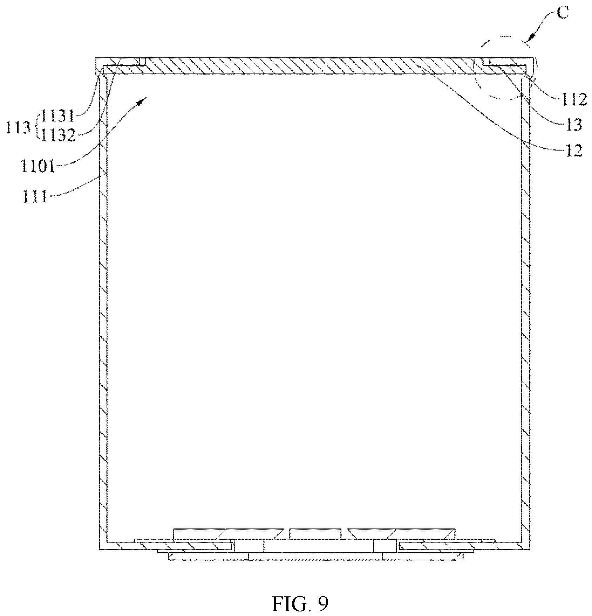

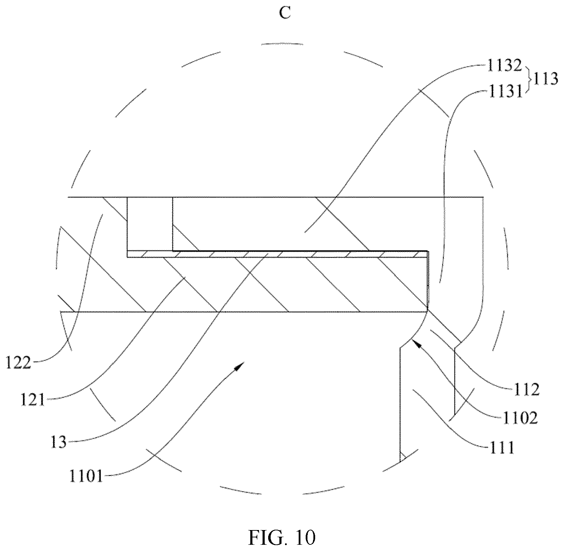

In some embodiments, referring to FIG. 9 and FIG. 10 together, a protruding column 122 is disposed on one side of the end cap 12, the side being oriented away from the receptacle 1101. The crimp-sealing portion 1132 is disposed around the protruding column 122 peripherally.

Understandably, as shown in FIG. 9 and FIG. 10, the end cap 12 includes a cover 121 and the protruding column 122. The protruding column 122 is disposed on one side of the cover 121, the side being away from the receptacle 1101. The protruding column 122 is disposed in the middle on one side of the cover 121, the side being oriented away from the receptacle 1101. The crimp-sealing portion 1132 is disposed on one side of the cover 121 and around the protruding column 122 peripherally, the side being oriented away from the receptacle 1101.

The protruding column 122 protrudes beyond the crimp-sealing portion 1132 along the Y-direction, or one side, away from the cover 121, of the protruding column 122 is flush with one side, away from the end cap 12, of the crimp-sealing portion 1132.

At least a part of the cover 121 is accommodated in the second housing section 113, and the cover 121 clutches on to the inner periphery of the first housing section 112 or to the housing body 111.

Based on the above technical solution, the crimp-sealing portion 1132 is disposed around the protruding column 122 peripherally, that is, the protruding column 122 protrudes beyond the crimp-sealing portion 1132 or is flush with the crimp-sealing portion 1132. In this way, when the battery cells 100 are assembled together to form a conventionally defined battery 1000 in the form such as a battery module, a battery pack, or a battery box, the battery cells 100 can be supported by the end cap 12 in the height direction of the battery cells 100, thereby improving the structural strength of the battery cells 100 and ease of use.

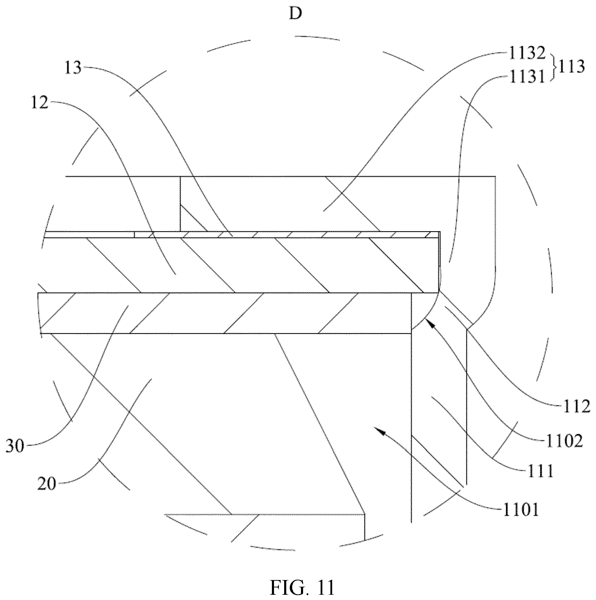

Still referring to FIG. 1 to FIG. 3 together with FIG. 11, a battery cell 100 is provided in a second aspect according to an embodiment of this application. The battery cell 100 includes an electrode assembly 20 and a housing assembly 10. The electrode assembly 20 is accommodated in the housing assembly 10. The housing assembly 10, the electrode assembly 20, and the relationship between them mentioned in this embodiment may be learned with reference to the housing assembly 10, the electrode assembly 20 and the relationship between them mentioned in the foregoing embodiment, details of which are omitted here.

The number of electrode assemblies 20 may be one or more. When the number of electrode assemblies 20 is plural, the plurality of electrode assemblies 20 are accommodated in the housing assembly 10. When the number of electrode assemblies 20 is plural, the plurality of electrode assemblies 20 may be arranged in a row along a preset direction in the housing assembly 10; or, the plurality of electrode assemblies 20 may be arrayed in multiple directions in the housing assembly 10 to form a plurality of rows. The plurality of electrode assemblies 20 may be spaced apart or abut against each other.

Based on the above technical solution, the battery cell 100 provided herein adopts the housing assembly 10 disclosed above, thereby also reducing the waste of space of the housing assembly 10 along the height direction, improving the space utilization rate of the housing 11, and in turn, increasing the energy density of the battery cell 100. For how the battery cell 100 specifically achieves the above technical effects, reference may be made to the description in the foregoing embodiment, details of which are omitted here.

In some embodiments, referring to FIG. 2 and FIG. 11 together, the battery cell 100 further includes a current collector 30. The current collector 30 is disposed at one end of the electrode assembly 20 and electrically connected to a tab of the electrode assembly 20, the end being close to the end cap 12.

The current collector 30 means a component configured to fix the tabs of the electrode assembly 20 together to serve as an electrical energy output end of the electrode assembly 20. The current collector 30 may be a copper sheet, aluminum sheet, or another metal sheet.

The current collector 30 is disposed at one end of the electrode assembly 20, the end being close to the end cap 12, so that the current collector 30 is also accommodated in the housing 11. The current collector 30 may be accommodated in at least one of the receptacle 1101, the first housing section 112, or the second housing section 113. Understandably, in some embodiments, the current collector 30 may be accommodated in the receptacle 1101 alone. In some other embodiments, a part of the current collector 30 may be accommodated in the receptacle 1101, and another part of the current collector may be accommodated in the first housing section 112. In still some other embodiments, a part of the current collector 30 may be accommodated in the receptacle 1101, another part of the current collector may be accommodated in the first housing section 112, and still another part of the current collector may be accommodated in the second housing section 113. In still some other embodiments, the current collector 30 may be accommodated in the first housing section 112 alone. Alternatively, a part of the current collector 30 is accommodated in the first housing section 112, and another part of the current collector is accommodated in the second housing section 113. Definitely, the current collector 30 may be accommodated in other positions, without being enumerated here exhaustively.

Based on the above technical solution, the electrode assembly 20 is electrically connected to the current collector 30, so that the electrical energy of the electrode assembly 20 can be output or input through the current collector 30.

In some embodiments, the current collector 30 may be welded to the inner periphery of the housing body 111, the inner periphery of the first housing section 112, or the inner periphery of the second housing section 113, or the current collector 30 may be welded to the end cap 12.

When the current collector 30 is welded to the inner periphery of the housing body 111, the inner periphery of the first housing section 112, or the inner periphery of the second housing section 113, the current collector 30 may be electrically connected to the housing 11 so that the battery cell 100 uses the housing 11 as an electrical energy output end or input end of the electrode assembly 20.

When the current collector 30 is welded to the end cap 12, the current collector 30 may be electrically connected to the end cap 12 so that the battery cell 100 uses the end cap 12 as an electrical energy output end or input end of the electrode assembly 20.

Based on the above technical solution, the current collector 30 can be welded to the housing 11 or the end cap 12, so that the battery cell 100 can use the housing 11 as an electric energy input end or output end, or use the end cap 12 as an electric energy input end or output end.

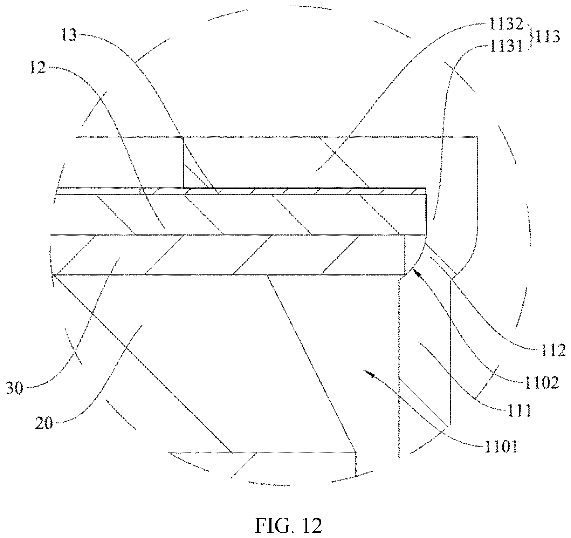

In some embodiments, referring to FIG. 12 to FIG. 14 together, the end cap 12 clutches on to the inner periphery of the first housing section 112, and the current collector 30 clutches on to the inner periphery of the first housing section 112 or to the housing body 111.

The end cap 12 may be fully accommodated in the second housing section 113, or just a part of the end cap 12 is accommodated in the second housing section 113. In addition, the end cap 12 clutches on to the inner periphery of the first housing section 112.

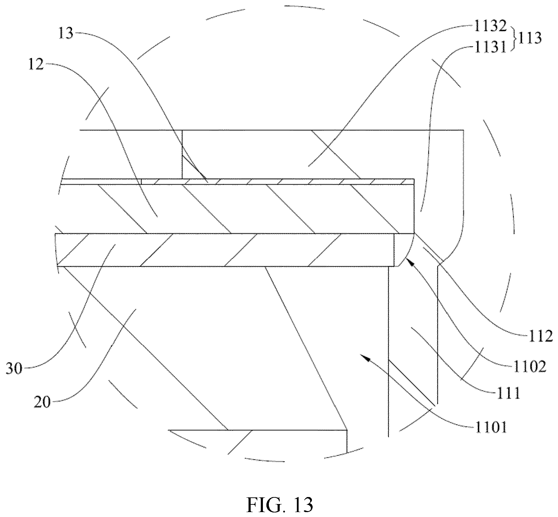

As shown in FIG. 12 and FIG. 13, the end cap 12 is fully accommodated in the second housing section 113, and clutches on to the inner periphery of the first housing section 112. How the end cap 12 clutches on to the inner periphery of the first housing section 112 may be learned from the technical solution shown in FIG. 4, details of which are omitted here. Under this condition, as shown in FIG. 12, the current collector 30 also clutches on to the inner periphery of the first housing section 112. In other words, the end cap 12 and the current collector 30 are configured to clutch on to different positions on the inner periphery of the first housing section 112, so that the first housing section 112 can support the end cap 12 and the current collector 30 separately, thereby improving the positional stability of the current collector 30 and the end cap 12 on the housing 11. As shown in FIG. 13, the current collector 30 may clutch on to the housing body 111 rather than the inner periphery of the first housing section 112. Therefore, the housing body 111 and the first housing section 112 support the current collector 30 and the end cap 12 respectively, thereby improving the positional stability of the current collector 30 and the end cap 12 on the housing 11.

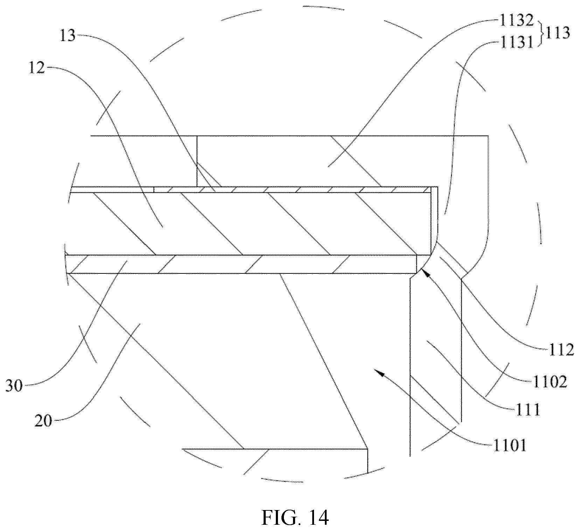

As shown in FIG. 14, a part of the end cap 12 is accommodated in the second housing section 113, and another part of the end cap is accommodated in the first housing section 112. How the end cap 12 clutches on to the inner periphery of the first housing section 112 may be learned from the technical solution shown in FIG. 5, details of which are omitted here. Under this condition, the current collector 30 clutches on to the inner periphery of the first housing section 112, as shown in FIG. 14. Alternatively, the current collector 30 may clutch on to the housing body 111. How the current collector 30 clutches on to the housing body 111 may be learned from the technical solution shown in FIG. 13. Therefore, both the current collector 30 and the end cap 12 can be supported by the housing 11 separately, thereby improving the positional stability of the current collector 30 and the end cap 12 on the housing 11.

As shown in FIG. 12 to FIG. 14, the current collector 30 may be fully accommodated in the first housing section 112. In addition, in some other embodiments, a part of the current collector 30 may be accommodated in the receptacle 1101, and another part of the current collector may be accommodated in the first housing section 112. The part, accommodated in the first housing section 112, of the current collector 30 clutches on to the inner periphery of the first housing section 112 or to the housing body 111.

Based on the above technical solution, the housing 11 can support the current collector 30 and the end cap 12 separately, thereby improving the positional stability of the current collector 30 and the end cap 12 in the housing 11.

It is hereby noted that, as shown in FIG. 12 and FIG. 14, when the current collector 30 is fully accommodated in the first housing section 112, the current collector 30 may be directly welded to the end cap 12, or may be welded to the first housing section 112 at a position used for clutching the current collector 30. In a case that a part of the current collector 30 is accommodated in the first housing section 112 and another part of the current collector is accommodated in the receptacle 1101, the current collector 30 can be welded to the end cap 12 and the first housing section 112 as mentioned above, and furthermore, can be welded to the inner periphery of the housing body 111.

As shown in FIG. 13, when the current collector 30 is fully accommodated in the first housing section 112, the current collector 30 may be directly welded to the end cap 12 or welded to the housing body 111 at a position used for clutching the current collector 30. In a case that a part of the current collector 30 is accommodated in the first housing section 112 and another part of the current collector is accommodated in the receptacle 1101, the current collector 30 may also be welded to the inner periphery of the housing body 111.

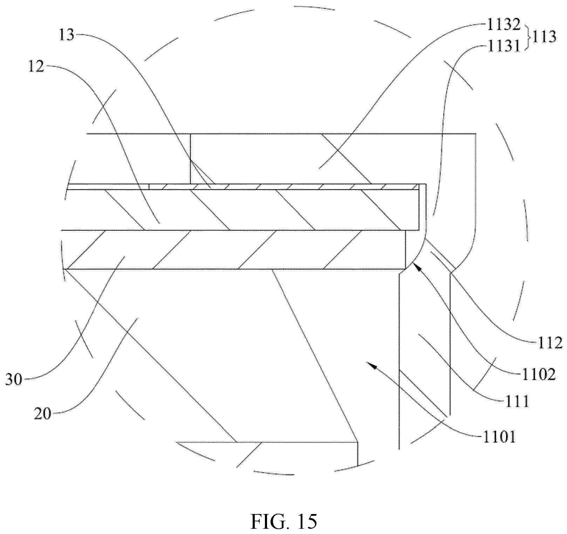

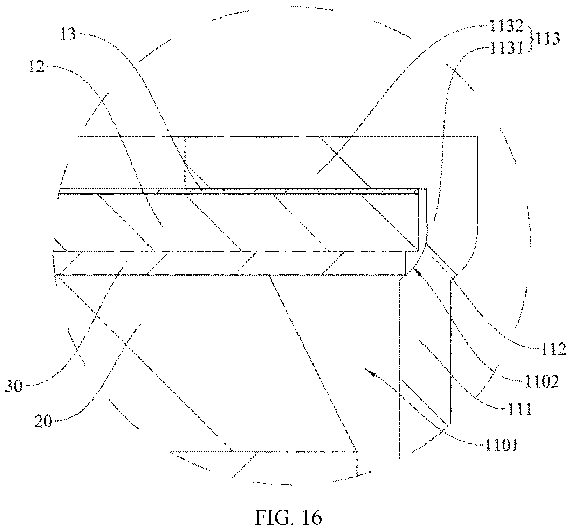

In some embodiments, referring to FIG. 15 and FIG. 16 together, the current collector 30 clutches on to the inner periphery of the first housing section 112 or to the housing body 111. The end cap 12 clutches on to the current collector 30, and is spaced apart from the first housing section 112 and the housing body 111.

As shown in FIG. 15, the end cap 12 can be fully accommodated in the second housing section 113. In this case, the end cap 12 is spaced apart from the first housing section 112 and the housing body 111. In this case, in some embodiments, as shown in FIG. 15, the current collector 30 can be fully accommodated in the second housing section 113, and the current collector 30 clutches on to the inner periphery of the first housing section 112. In some other embodiments, alternatively, a part of the current collector 30 is accommodated in the second housing section 113, and another part of the current collector is accommodated in the first housing section 112; or, a part of the current collector 30 is accommodated in the second housing section 113, another part of the current collector is accommodated in the first housing section 112, and another part of the current collector is accommodated in the receptacle 1101; or, the current collector 30 is fully accommodated in the first housing section 112; or, a part of the current collector 30 is accommodated in the first housing section 112, and another part of the current collector is accommodated in the receptacle 1101. In addition, the current collector 30 clutches on to the inner periphery of the first housing section 112 or to the housing body 111.

As shown in FIG. 16, a part of the end cap 12 may be accommodated in the second housing section 113, another part of the end cap may be accommodated in the first housing section 112, and the end cap 12 is spaced apart from the first housing section 112 and the housing body 111. In this case, as shown in FIG. 16, the current collector 30 may be fully accommodated in the first housing section 112; or, a part of the current collector 30 is accommodated in the first housing section 112, and another part of the current collector is accommodated in the receptacle 1101. In addition, the current collector 30 clutches on to the inner periphery of the first housing section 112 or to the housing body 111.

Based on the above technical solution, the inner periphery of the first housing section 112 or the housing body 111 directly clutches the current collector 30 but does not directly clutch the end cap 12. The end cap 12 clutches on to the current collector 30. In this way, the end cap 12 clutches on to the current collector 30, and clutches on to the inner periphery of the first housing section 112 or to the housing body 111 through the current collector 30, thereby implementing indirect clutching.

It is hereby noted that, on condition that the current collector 30 clutches on to the inner periphery of the first housing section 112, the current collector 30 may be welded to the end cap 12 or the inner periphery of the first housing section 112 at a position used for clutching the current collector 30. The current collector 30 may be further welded to the inner periphery of the second housing section 113 when at least a part of the current collector 30 is accommodated in the second housing section 113 and when the outer periphery of the part, accommodated in the second housing section 113, of the current collector 30 contacts the inner periphery of the second housing section 113. When at least a part of the current collector 30 is accommodated in the receptacle 1101, the current collector 30 may also be welded to the inner periphery of the housing body 111.

On condition that the current collector 30 clutches on to the housing body 111, the current collector 30 may be welded to the end cap 12 or to the housing body 111 at a position used for clutching the current collector 30. When at least a part of the current collector 30 is accommodated in the receptacle 1101, the current collector 30 may also be welded to the inner periphery of the housing body 111.

In some embodiments, referring to FIG. 11, the end cap 12 clutches on to the inner periphery of the first housing section 112 or to the housing body 111. At least a part of the current collector 30 is accommodated in the receptacle 1101, and is spaced apart from the inner periphery of the first housing section 112. The current collector 30 is fixed to the end cap 12 or the inner periphery of the housing body 111.

Various scenarios in which the end cap 12 clutches on to the inner periphery of the first housing section 112 and various scenarios in which the end cap 12 clutches on to the housing body 111 may be learned from the description in the foregoing embodiments, for example, from any technical solution shown in FIG. 4 to FIG. 8.

That at least a part of the current collector 30 is accommodated in the receptacle 1101 may be: a part of the current collector 30 is accommodated in the receptacle 1101, and another part of the current collector is accommodated in the first housing section 112, as shown in FIG. 11; or, a part of the current collector 30 is accommodated in the receptacle 1101, and another part of the current collector is accommodated in the first housing section 112 and the second housing section 113. Alternatively, the current collector 30 may be fully accommodated in the receptacle 1101.

That the current collector 30 is spaced apart from the inner periphery of the first housing section 112 may be understood as: the current collector 30 does not clutch on to the inner periphery of the first housing section 112.

The current collector 30 may be fixed to the end cap 12. The end cap 12 clutches on to the inner periphery of the first housing section 112 or to the housing body 111, that is, clutches on to the housing 11. The current collector 30 is fixed to the end cap 12, and may be fixed in the housing 11 through the end cap 12.

The current collector 30 may be fixed to the inner periphery of the housing body 111 instead. Based on this, the current collector 30 is directly fixed to the inner periphery of the housing body 111 to implement positional fixation of the current collector 30 in the housing 11.

It is hereby noted that when the current collector 30 is fixed to the end cap 12, the current collector 30 may be fixed to the end cap 12 by welding, whereby the end cap 12 is electrically connected to the current collector 30 at the same time, and the end cap 12 serves as an electrical energy output end or input end of the battery cell 100. When the current collector 30 is fixed to the inner periphery of the housing body 111, the current collector 30 may be fixed to the housing body 111 by welding, whereby the end cap 12 is electrically connected to the housing body 111 at the same time, and the housing 11 serves as an electrical energy output end or input end of the battery cell 100.

Therefore, based on the above technical solution, on the one hand, the current collector 30 can be fixed in the housing 11 through the end cap 12. On the other hand, the current collector 30 can be fixed to the end cap 12, and the current collector 30 can be fixed to the housing body 111, by welding separately. In this way, not only the current collector 30 is fixed in the housing 11, but also the housing 11 or the end cap 12 can serve as an electrical energy output end or input end of the battery cell 100.

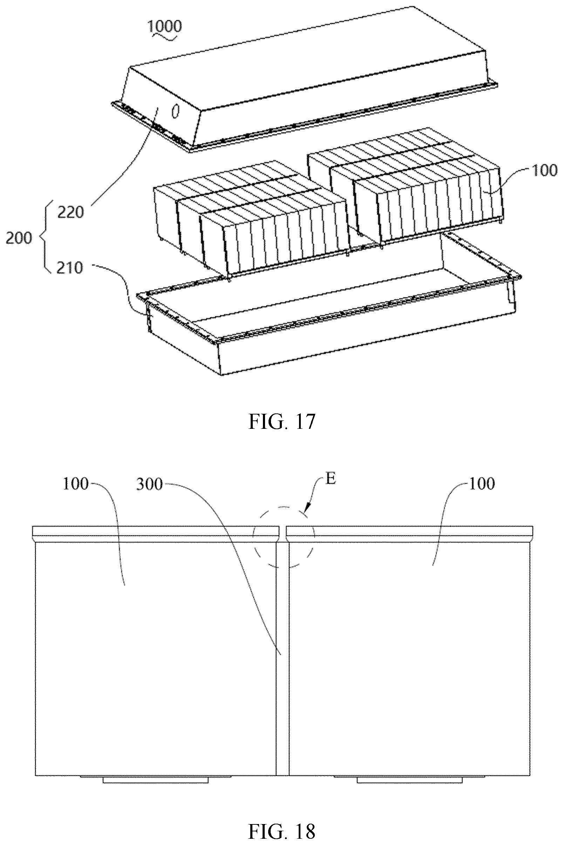

Referring to FIG. 1 to FIG. 3 together with FIG. 17, in a third aspect, a battery 1000 is provided according to an embodiment of this application. The battery includes a plurality of battery cells 100. The battery cells 100 according to this embodiment are the same as the battery cell 100 according to the foregoing embodiment. Reference may be made to the description of the battery cell 100 in the foregoing embodiment, details of which are omitted here.

The battery 1000 according to this embodiment of this application is applied in electrical devices that use the battery 1000 as a power supply or in various energy storage systems that use the battery 1000 as an energy storage unit.

The plurality of battery cells 100 may be connected in series, parallel, or series-and-parallel pattern. The series-and-parallel pattern means a combination of series connection and parallel connection of the plurality of battery cells 100.

The battery 1000 may also include a fixing component formed by end plates, side plates, and the like. A plurality of battery cells 100 are connected in series, parallel, or series-and-parallel pattern to form an entirety. The entirety is fixed by the fixing component formed by end plates, side plates, and the like, so that the battery 1000 forms what is called a "battery module" in conventional definitions.

The battery 1000 may also include a box 200. The box 200 is a structure that includes an internal space for accommodating the battery cells 100. The box 200 may assume a variety of structures. In some embodiments, the box 200 includes a first housing 210 and a second housing 220. The first housing 210 and the second housing 220 fit and cover each other to define a space configured to accommodate the battery cells 100. The first housing 210 may be a hollow structure opened at one end. The second housing 220 may be a plate-like structure. The second housing 220 fits and covers the opening of the first housing 210 so that the first housing 210 and the second housing 220 together define a space for accommodating the battery cells 100. Alternatively, both the first housing 210 and the second housing 220 may a hollow structure opened at one end, as shown in FIG. 7. The opening of the first housing 210 fits and covers the opening of the second housing 220, so that the first housing 210 and the second housing 220 jointly define a space for accommodating the battery cells 100. In addition, the box 200 formed by the first housing 210 and the second housing 220 may be in various shapes such as a cylinder or a cuboid.

In some embodiments, a plurality of battery cells 100 may be connected in series, parallel, or series-and-parallel pattern to form an entirety. The entirety of the plurality of battery cells 100 may be directly accommodated in the box 200. Alternatively, in some other embodiments, a plurality of battery cells 100 may be connected in series, parallel, or series-and-parallel pattern to form a plurality of modules first, and then each module is fixed by a corresponding fixing component to form the "battery module". In other words, a plurality of battery cells 100 form a plurality of "battery modules". The plurality of battery modules are connected in series, parallel, or series-and-parallel pattern to form an entirety, and the entirety is accommodated in the box 200. Based on this, the battery 1000 forms what is called a "battery pack", "battery box", or the like in conventional definitions.

Further, the battery 1000 may include other structures such as a busbar component that is configured to implement electrical connections between a plurality of battery cells 100, and between a plurality of battery modules.

Based on the above technical solution, the battery 1000 provided herein adopts the battery cell 100 disclosed above, thereby also reducing the waste of space of the battery cell 100 along the height direction, improving the space utilization rate of the battery 1000, and in turn, increasing the energy density of the battery 1000. For how the battery 1000 specifically achieves the above technical effects, reference may be made to the description in the foregoing embodiment, details of which are omitted here.

In some embodiments, referring to FIG. 4, FIG. 18, and FIG. 19 together, the outer diameter of the second housing section 113 is greater than the outer diameter of the housing body 111. The battery 1000 further includes a thermal management component 300. At least a part of the thermal management component 300 is located in a space defined by an outer sidewall of the housing body 111, an outer sidewall of the first housing section 112, and an outer sidewall of the second housing section 113.

The outer diameter of the second housing section 113 is greater than that of the housing body 111. In this way, the outer periphery of the housing body 111, the outer periphery of the first housing section 112, and the outer periphery of the second housing section 113 close in to form a notch. In other words, a notch, that is, the "space" mentioned above, is formed on the outer periphery of the housing 11.

When a thermal management component 300 needs to be disposed outside the battery cell 100, at least a part of the thermal management component 300 may be accommodated in the "space". This reduces the waste of the space defined by the outer sidewall of the housing body 111, the outer sidewall of the first housing section 112, and the outer sidewall of the second housing section 113, thereby improving the utilization rate of the internal space of the battery 1000, and in turn, increasing the energy density of the battery 1000.

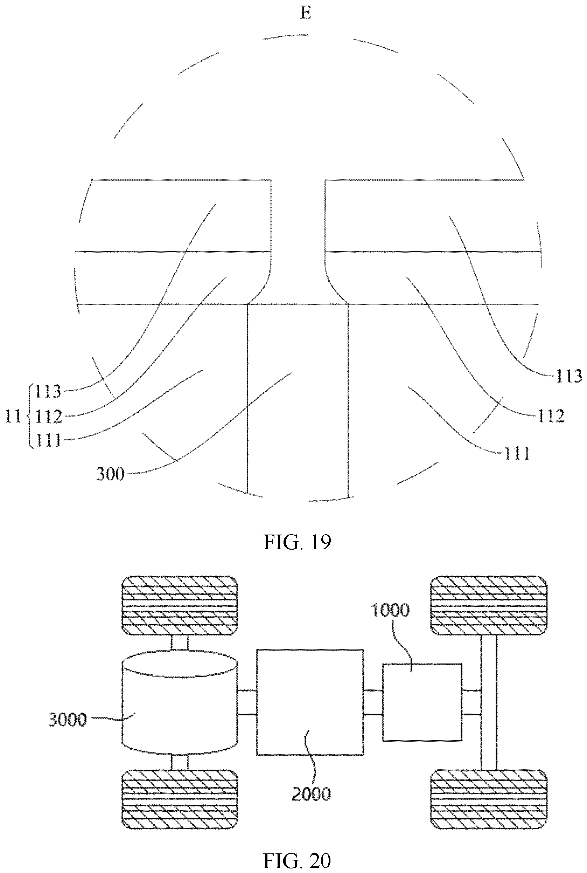

As shown in FIG. 18 and FIG. 19, when the thermal management component 300 needs to be disposed between two adjacent battery cells 100, the thermal management component 300 may be located in a space formed by two adjacent housings 11 coming together.

The thermal management component 300 may be a water cooling plate, a water cooling tube, or a component formed by a water cooling plate and a water cooling tube that communicate with each other. A heat exchange medium such as liquid and gas may be passed inside the thermal management component 300 to implement heat exchange between the heat exchange medium and the battery cell 100, thereby maintaining the temperature of the battery cell 100.

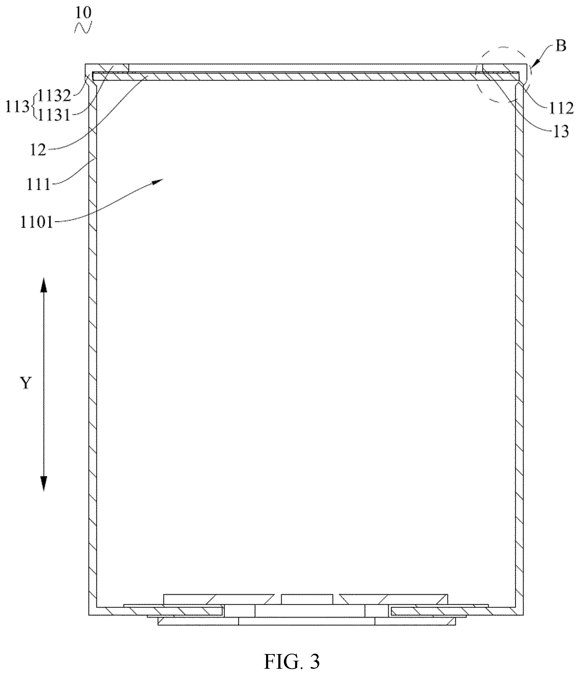

It is hereby noted that the housing assembly 10 according to an embodiment of this application eliminates the waste of space of the housing 11 in the height direction, but the dimension of the housing 11 in the width direction of the first housing section 112 and the second housing section 113 is increased. The width direction referred to here may be the visual horizontal direction in FIG. 2 and FIG. 3, that is, a direction perpendicular to the height direction of the battery cell 100.

Based on the above layout of the thermal management component 300, at least a part of the thermal management component 300 can be located in the space defined by the outer sidewall of the housing body 111, the outer sidewall of the first housing section 112, and the outer sidewall of the second housing section 113, thereby efficiently utilizing the outer space brought by the increased dimensions of the first housing section 112 and the second housing section 113 in the width direction, and in turn, improving the utilization rate of the internal space of the battery 1000 and increasing the energy density of the battery 1000.

Referring to FIG. 1 to FIG. 3 together with FIG. 17 and FIG. 20, in a fourth aspect, an electrical device is provided according to an embodiment of this application. The electrical device includes a battery 1000. The battery 1000 is configured to provide electrical energy for the electrical device. The battery 1000 according to this embodiment is the same as the battery 1000 according to the foregoing embodiment. Reference may be made to the description of the battery 1000 in the foregoing embodiment, details of which are omitted here.

The electrical device may be, but is not limited to, a mobile phone, a tablet, a laptop computer, an electric tool, a vehicle, a ship, a spacecraft, or the like. The electric toy may include stationary or mobile electric toys, such as a game console, an electric car toy, an electric ship toy, an electric airplane toy, and the like. The spacecraft may include an airplane, a rocket, a space shuttle, a spaceship, and the like. The vehicle may be an internal combustion engine vehicle, a natural gas vehicle, or a new energy vehicle. The new energy vehicle may be a battery electric vehicle, a hybrid electric vehicle, a range-extended electric vehicle, or the like.

As shown in FIG. 20, the battery 1000 is disposed inside the vehicle. The battery 1000 may be disposed at the bottom, front, or rear of the vehicle. The battery 1000 may be configured to supply power to the vehicle. For example, the battery 1000 may serve as an operating power supply of the vehicle. The vehicle may further include a controller 2000 and a motor 3000. The controller 2000 is configured to control the battery 1000 to supply power to the motor 3000, for example, to meet electrical energy requirements in starting, navigating, or running the vehicle.

In some embodiments of this application, the battery 1000 serves not only as an operating power supply of the vehicle, but may also serve as a driving power supply of the vehicle to provide driving power for the vehicle in place of or partly in place of fuel oil or natural gas.

Based on the above technical solution, the electrical device provided herein adopts the battery 1000 disclosed above, thereby also reducing the waste of space of the battery 1000 along the height direction, improving the space utilization rate of the electrical device, and in turn, increasing the energy density of the electrical device.

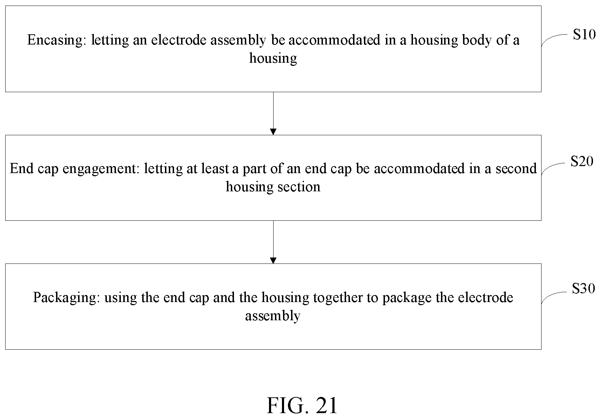

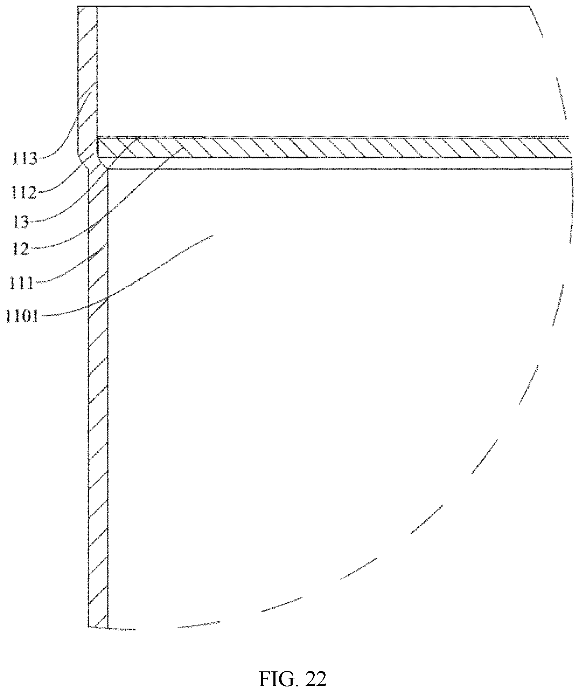

Referring to FIG. 21 to FIG. 24 together, in a fifth aspect, an assembling method of a battery cell 100 is provided according to an embodiment of this application. The battery cell 100 is the same as the battery cell 100 mentioned in the foregoing embodiment. Reference may be made to the description in the foregoing embodiment, details of which are omitted here. The assembling method includes the following steps:
S10: Encasing: letting the electrode assembly 20 be accommodated in the housing body 111 of the housing 11.
   In this step, specifically, the electrode assembly 20 is put into the second housing section 113 from the opening of the second housing section 113 at an end away from the first housing section 112, and then placed into the receptacle 1101 of the housing body 111 through the second housing section 113 and the first housing section 112 in sequence.
S20: End cap engagement: letting at least a part of the end cap 12 be accommodated in the second housing section 113.
   In this step, as shown in FIG. 22, specifically, the end cap 12 is put into the second housing section 113 from the opening of the second housing section 113 at an end away from the first housing section 112, so that at least a part of the end cap 12 is accommodated in the second housing section 113, and the end cap 12 clutches on to the inner periphery of the first housing section 112 or to the housing body 111, thereby making the end cap 12 cover the opening of the receptacle 1101.
S30: Packaging: using the end cap 12 and the housing 11 together to package the electrode assembly 20.

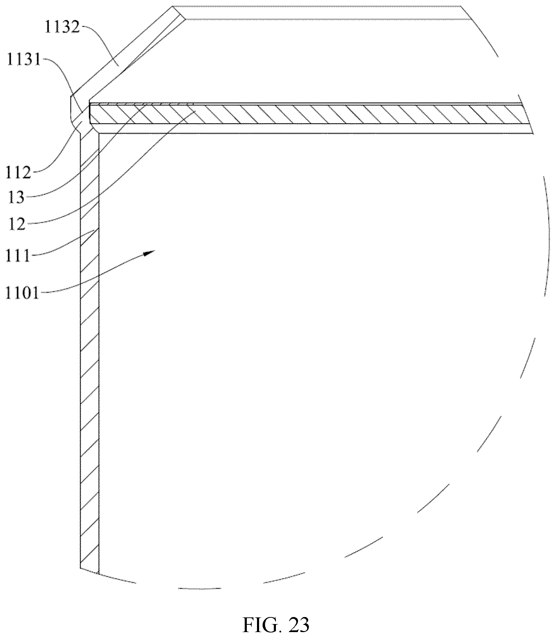

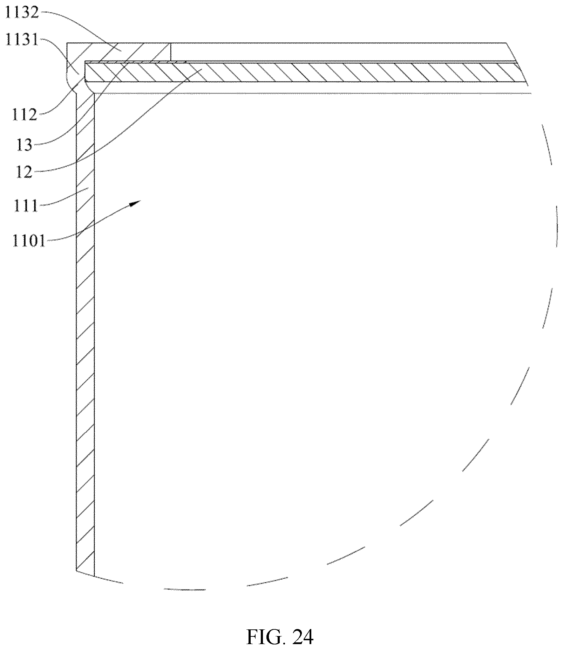

In this step, as shown in FIG. 23 and FIG. 24, the end cap 12 is fixed to the housing 11 so that the end cap 12 stably covers the opening of the receptacle 1101. Furthermore, the clearance between the end cap 12 and the housing 11 is sealed, so that the end cap 12 works together with the housing body 111, the first housing section 112, and the second housing section 113 to package the electrode assembly 20.

Based on the above technical solution, when applied to the battery cell 100 mentioned in the foregoing embodiment, the assembling method of the battery cell 100 makes the inner diameter of the second housing section 113 of the housing 11 greater than the inner diameter of the housing body 111, and enables the first housing section 112 to implement the transition between the inner periphery of the second housing section 113 and the inner periphery of the housing body 111. Therefore, after being engaged, the end cap 12 can clutch on to the inner periphery of the first housing section 112 or to the housing body 111, thereby reducing the waste of space of the housing assembly 10 along the height direction, improving the space utilization rate of the housing 11, and in turn, increasing the energy density of the battery cell 100.

In some embodiments, referring to FIG. 21 to FIG. 24 together, the packaging in step S30 includes the following steps:
S31: Adhesive bonding: affixing an adhesive layer 13 onto one side of the end cap 12, the side being oriented away from the electrode assembly 20;
   The adhesive bonding operation may be performed before the end cap 12 is engaged or after the end cap is engaged. as long as at least a part of the end cap 12 is accommodated in the second housing section 113, the end cap 12 clutches on to the inner periphery of the first housing section 112 or to the housing body 111, and the adhesive layer 13 is located on one side of the end cap 12, the side being oriented away from the electrode assembly 20.
S32: Pre-crimping: bending the second housing section 113 at an end away from the first housing section 112 toward the end cap 12 to form a crimp-sealing portion 1132.
   As shown in FIG. 23, the second housing section 113 at an end away from the first housing section 112 is bent toward the end cap 12 to form a crimp-sealing portion 1132. The crimp-sealing portion 1132 is bent toward the adhesive layer 13 on the end cap 12, thereby facilitating subsequent connection between the crimp-sealing portion 1132 and the adhesive layer 13.
S33: Hot-crimp sealing: Heat-sealing the crimp-sealing portion 1132 and the end cap 12 by use of the adhesive layer 13.

As shown in FIG. 24, this step includes heating of the adhesive layer 13 and crimping of the crimp-sealing portion 1132. Specifically, the adhesive layer 13 is heated, and the crimp-sealing portion 1132 is crimped to one side of the end cap 12, the side being oriented away from the receptacle 1101. In other words, the crimp-sealing portion 1132 is crimped to the adhesive layer 13 so that the two opposite sides of the adhesive layer 13 are fused to the crimp-sealing portion 1132 and the end cap 12 respectively, thereby achieving the effects of fixing and sealing the crimp-sealing portion 1132 and the end cap 12.

During crimp-sealing of the crimp-sealing portion 1132, the crimp-sealing portion 1132 needs to be bent until it contacts the adhesive layer 13. In this way, it is convenient for the adhesive layer 13 to soundly fill the clearance between the crimp-sealing portion 1132 and the end cap 12, and implement the fixation between the crimp-sealing portion 1132 and the end cap 12 and the sealing between the crimp-sealing portion 1132 and the end cap 12.

In this step, the crimp-sealing portion 1132 may be formed by bending the second housing section 113. After the pre-crimping operation is performed, the adhesive layer 13 is heated, and then the crimp-sealing portion 1132 is crimped to the adhesive layer 13, so that the adhesive layer 13 implements the fixation and sealing between the crimp-sealing portion 1132 and the end cap 12. In addition, the adhesive layer 13 may be heated before the pre-crimping operation, and then the second housing section 113 is pre-crimped and crimp-sealed sequentially, so that the crimp-sealing portion 1132 and the end cap 12 are fixed and sealed together through the adhesive layer 13.

Based on the above technical solution, after the end cap 12 is engaged, the fixation and sealing between the crimp-sealing portion 1132 and the end cap 12 can be implemented by just pre-crimping and crimp-sealing the end cap 12 sequentially and heating the adhesive layer 13. Such arrangement makes the assembling process of battery cells 100 very simple and time-saving, thereby improving the production efficiency of the battery cells 100. In addition, the adhesive layer 13 can implement both fixation and sealing between the crimp-sealing portion 1132 and the end cap 12 at the same time. In contrast to some conventional technical solutions in which the sealing between the end cap 12 and the housing 11 is implemented by a rubber ring, the connection between the housing 11 and the end cap 12 in this embodiment of this application is more reliable and more pressure-resistant. In addition, the component (adhesive layer 13) configured to implement fixation between the housing 11 and the end cap 12 is smaller in size and more space-saving in footprint, thereby achieving a higher energy density of the battery cell 100.

In some embodiments, referring to FIG. 20, the encasing operation in step S10 further includes the following steps:
S11: Disposing a current collector 30 at one end of the electrode assembly 20, the end being close to the end cap 12; and electrically connecting the current collector 30 to a tab of the electrode assembly 20.
   The electrical connection between the current collector 30 and the electrode assembly 20 may be performed before the electrode assembly 20 enters the receptacle 1101. Subsequently, in putting the electrode assembly 20 into the housing, the electrode assembly 20 and the current collector 30 are accommodated together into the housing 11. Alternatively, the electrical connection between the current collector 30 and the electrode assembly 20 may be performed after the electrode assembly 20 is accommodated in the receptacle 1101.
S12: Welding the current collector 30 to the housing body 111, the first housing section 112, or the second housing section 113.

This step is performed after the current collector 30 enters the housing 11, so as to facilitate welding of the current collector 30 to the housing body 111, the first housing section 112, or the second housing section 113, and enable the housing 11 to serve as an electrical energy input end or output out of the battery cell 100.

Whether the current collector 30 is welded to the housing body 111, the first housing section 112, or the second housing section 113 depends on the specific position of the current collector 30 in the housing 11. Specifically, when the current collector 30 is in contact with the housing body 111, the first housing section 112, or the second housing section 113, the current collector 30 may be welded at a position where the current collector 30 contacts the housing body 111, the first housing section 112, or the second housing section 113.

Based on the above technical solution, the housing 11 is welded to the current collector 30, so that the housing 11 can serve as an electrical energy input end or output end of the battery cell 100.

In some embodiments, referring to FIG. 20, the encasing operation in step S10 further includes the following step:
S11: Disposing a current collector 30 at one end of the electrode assembly 20, the end being close to the end cap 12; and electrically connecting the current collector 30 to a tab of the electrode assembly 20.

The electrical connection between the current collector 30 and the electrode assembly 20 may be performed before the electrode assembly 20 enters the receptacle 1101. Subsequently, in putting the electrode assembly 20 into the housing, the electrode assembly 20 and the current collector 30 are accommodated together into the housing 11. Alternatively, the electrical connection between the current collector 30 and the electrode assembly 20 may be performed after the electrode assembly 20 is accommodated in the receptacle 1101.

In addition, the assembling method of the battery cell 100 further includes the following step:
S40: Welding the current collector 30 to the end cap 12.

The current collector 30 may be welded to the end cap 12 before the end cap 12 is engaged, whereupon the current collector 30 and the end cap 12 are accommodated together in the housing 11. In this case, the current collector 30, the electrode assembly 20, and the end cap 12 may be accommodated together in the housing 11 during the encasing operation. Alternatively, the current collector 30 may be welded to the end cap 12 after the end cap 12 is engaged. Specifically, after the current collector 30 enters the housing 11 and the end cap 12 is engaged with the housing, the current collector 30 may be welded to the end cap 12 by penetration-welding.

Based on the above technical solution, the end cap 12 is welded to the current collector 30, so that the end cap 12 can serve as an electrical energy input end or output end of the battery cell 100.

What is described above is merely optional embodiments of this application, but not intended to limit this application. To a person skilled in the art, various modifications and variations may be made to this application. Any modifications, equivalent replacements, improvements, and the like made without departing from the spirit and principles of this application still fall within the protection scope of claims of this application.

## Claims

1. A housing assembly (10), **characterized in that** the housing assembly comprises:
a housing (11), comprising a housing body (111) with a receptacle (1101), a first housing section (112) disposed at an edge of an opening of the receptacle (1101), and a second housing section (113) disposed at one end of the first housing section (112), the end being away from the housing body (111), wherein the receptacle (1101) is configured to accommodate an electrode assembly (20), and an inner diameter of the second housing section (113) is greater than an inner diameter of the housing body (111); and
an end cap (12), wherein the end cap (12) is at least partially accommodated in the second housing section (113) and configured to work together with the housing (11) to package the electrode assembly (20).

2. The housing assembly (10) according to claim 1, **characterized in that** the end cap (12) is fully accommodated in the second housing section (113), and clutches on to an inner periphery of the first housing section (112); or
a part of the end cap (12) is accommodated in the second housing section (113), and another part of the end cap is accommodated in the first housing section (112) and clutches on to the inner periphery of the first housing section (112); or
a part of the end cap (12) is accommodated in the second housing section (113), and another part of the end cap is accommodated in the first housing section (112) and clutches on to the housing body (111).

3. The housing assembly (10) according to claim 1 or 2, **characterized in that** a clutching surface (1102) configured to clutch the end cap (12) is disposed on an inner periphery of the first housing section (112); and the clutching surface (1102) is a plane perpendicular to a distribution direction of the first housing section (112) and the second housing section (113), or the clutching surface (1102) flares out from the housing body (111) to the second housing section (113).

4. The housing assembly (10) according to claim 3, **characterized in that** the clutching surface (1102) flares out from the housing body (111) to the second housing section (113), and the clutching surface (1102) is a flat face or an arc face.

5. The housing assembly (10) according to any one of claims 1 to 4, **characterized in that** the end cap (12) is in interference fit with the second housing section (113).

6. The housing assembly (10) according to any one of claims 1 to 5, **characterized in that** an outer diameter of the second housing section (113) is greater than an outer diameter of the housing body (111).

7. The housing assembly (10) according to any one of claims 1 to 6, **characterized in that** a crimp-sealing portion (1132) bent toward the end cap (12) is disposed at one end of the second housing section (113), the end being away from the first housing section (112); and the crimp-sealing portion (1132) is constrained on one side of the end cap (12), the side being oriented away from the receptacle (1101).

8. The housing assembly (10) according to claim 7, **characterized in that** an adhesive layer (13) configured to seal the crimp-sealing portion (1132) and the end cap (12) is disposed between the crimp-sealing portion (1132) and the end cap (12).

9. The housing assembly (10) according to claim 8, **characterized in that** a thickness of the adhesive layer (13) ranges from 50 µm to 2 mm.

10. The housing assembly (10) according to any one of claims 7 to 9, **characterized in that** a protruding column (122) is disposed on one side of the end cap (12), the side being oriented away from the receptacle (1101); and the crimp-sealing portion (1132) is disposed around the protruding column (122) peripherally.

11. A battery cell (100), **characterized in that** the battery cell comprises:
an electrode assembly (20); and
the housing assembly (10) according to any one of claims 1 to 10, wherein the electrode assembly (20) is accommodated in the housing assembly (10).

12. The battery cell (100) according to claim 11, **characterized in that** the battery cell (100) further comprises a current collector (30), and the current collector (30) is disposed at one end of the electrode assembly (20) and electrically connected to a tab of the electrode assembly (20), the end being close to the end cap (12).

13. The battery cell (100) according to claim 12, **characterized in that** the current collector (30) is welded to an inner periphery of the housing body (111), an inner periphery of the first housing section (112), an inner periphery of the second housing section (113), or the end cap (12).

14. The battery cell (100) according to claim 12 or 13, **characterized in that** the end cap (12) clutches on to an inner periphery of the first housing section (112), and the current collector (30) clutches on to an inner periphery of the first housing section (112) or the housing body (111).

15. The battery cell (100) according to claim 12 or 13, **characterized in that** the current collector (30) clutches on to an inner periphery of the first housing section (112) or the housing body (111), and the end cap (12) clutches on to the current collector (30), and is spaced apart from the first housing section (112) and the housing body (111).

16. The battery cell (100) according to claim 12 or 13, **characterized in that** the end cap (12) clutches on to an inner periphery of the first housing section (112) or the housing body (111); at least a part of the current collector (30) is accommodated in the receptacle (1101), and is spaced apart from an inner periphery of the first housing section (112); and the current collector (30) is fixed to the end cap (12) or an inner periphery of the housing body (111).

17. A battery (1000), **characterized in that** the battery comprises a plurality of the battery cells (100) according to any one of claims 11 to 16.

18. The battery (1000) according to claim 17, **characterized in that** an outer diameter of the second housing section (113) is greater than an outer diameter of the housing body (111), the battery (1000) further comprises a thermal management component (300), and at least a part of the thermal management component (300) is located in a space defined by an outer sidewall of the housing body (111), an outer sidewall of the first housing section (112), and an outer sidewall of the second housing section (113).

19. An electrical device, **characterized in that** the electrical device comprises the battery (1000) according to claim 17 or 18, and the battery (1000) is configured to provide electrical energy.

20. An assembling method of the battery cell (100) according to any one of claims 11 to 16, **characterized in that** the method comprises the following steps:
encasing: letting the electrode assembly (20) be accommodated in the housing body (111) of the housing (11);
end cap engagement: letting at least a part of the end cap (12) be accommodated in the second housing section (113); and
packaging: using the end cap (12) and the housing (11) together to package the electrode assembly (20).

21. The assembling method of the battery cell (100) according to claim 20, **characterized in that** the packaging comprises the following steps:
adhesive bonding: affixing an adhesive layer (13) on one side of the end cap (12), the side being oriented away from the electrode assembly (20);
pre-crimping: bending the second housing section (113) at an end away from the first housing section (112) toward the end cap (12) to form a crimp-sealing portion (1132); and
heat sealing: heat-sealing the crimp-sealing portion (1132) and the end cap (12) by use of the adhesive layer (13).

22. The assembling method of the battery cell (100) according to claim 20 or 21, **characterized in that** the encasing further comprises:
disposing a current collector (30) at one end of the electrode assembly (20), the end being close to the end cap (12); and electrically connecting the current collector (30) to a tab of the electrode assembly (20); and
welding the current collector (30) to the housing body (111), the first housing section (112), or the second housing section (113).

23. The assembling method of the battery cell (100) according to claim 20 or 21, **characterized in that** the encasing further comprises:
disposing a current collector (30) at one end of the electrode assembly (20), the end being close to the end cap (12); and electrically connecting the current collector (30) to a tab of the electrode assembly (20); and
the assembling method further comprises:
welding the current collector (30) to the end cap (12).
